# FASCICULE DE BREVET EUROPEEN

(11) **EP 3 303 097 B1**
(45) Date de publication et mention de la délivrance du brevet: **11.09.2019**
(21) Numéro de dépôt: 16733661.9
(22) Date de dépôt: 07.06.2016
(51) Int. Cl.: B62D 6/00

(54) **UTILISATION DE L'ASSISTANCE DE DIRECTION POUR COMPENSER LES EFFETS NÉGATIFS INDUITS PAR UN DIFFÉRENTIEL À GLISSEMENT LIMITÉ**
VERWENDUNG DES SERVOLENKUNG ZUR KOMPENSATION DER NEGATIVEN AUSWIRKUNGEN EINES SPERRDIFFERENTIALS
USE OF THE POWER STEERING TO COMPENSATE FOR THE NEGATIVE EFFECTS INTRODUCED BY A LIMITED-SLIP DIFFERENTIAL

(30) Priorité: 08.06.2015 FR 1555187
(43) Date de publication de la demande: 11.04.2018
(73) Titulaire: JTEKT Europe, 69540 Irigny (FR)
(72) Inventeur: MICHELIS, André, 38121 Chonas l'Amballan (FR); NOBILI, Fabrice, 07690 Vanosc (FR)
(74) Mandataire: Chevalier, Renaud Philippe
(86) Numéro de dépôt international: PCT/FR2016/051356
(87) Numéro de publication internationale: WO 2016/198779

(56) Documents cités:
- EP-A1- 2 412 608
- DE-A1- 10 345 484
- DE-A1-102006 044 088
- DE-A1-102014 004 729
- FR-A1- 2 921 620
- GB-A- 2 259 063
- JP-A- H0 899 642
- JP-A- 2012 057 639
- JP-A- 2012 081 821
- JP-A- 2012 081 827
- US-A1- 2005 283 290
- US-A1- 2012 271 516

## Description

La présente invention concerne les systèmes de direction assistée, et plus particulièrement les systèmes de direction assistée qui équipent un train roulant à la fois directionnel et moteur, dont les roues directrices, manoeuvrées par le système de direction, sont également motrices, c'est-à-dire agencées pour transmettre à la route tout ou partie du couple d'entraînement délivré par le moteur du véhicule, afin de propulser ledit véhicule.

La présente invention se rapporte plus particulièrement à un système de direction destiné à manoeuvrer un train roulant équipé d'un différentiel à glissement limité.

Il est connu de longue date d'équiper un train roulant moteur, comprenant typiquement une roue motrice gauche et une roue motrice droite, d'un différentiel qui permet à la roue gauche de tourner à une vitesse différente de la roue droite, notamment lors de la prise de virage.

Un inconvénient bien connu du différentiel est que, en cas de perte d'adhérence (patinage) de l'une des roues motrices du train roulant, le couple d'entraînement est totalement transféré sur cette roue, qui a donc tendance à s'emballer, tandis que l'autre roue motrice, qui reste en prise avec la route, ne transmet plus de couple et perd donc sa capacité motrice.

Pour remédier à cet inconvénient, on a notamment développé des différentiels spéciaux, dits différentiels à glissement limité (ou « LSD » pour « Limited Slip Differential »), par exemple du type Torsen®.

Ces différentiels à glissement limité, ou « différentiels autobloquants », sont conçus pour pouvoir autoriser, comme les différentiels conventionnels, une différence de vitesse de rotation entre la roue gauche et la roue droite, notamment en virage, mais également, à la différence des différentiels conventionnels, pour adopter automatiquement, par un phénomène dit « d'auto-blocage », lorsque l'une des roues subit une perte de synchronisme avec l'autre roue, et plus particulièrement lorsque l'une des roues subit une perte d'adhérence et donc une chute de son couple transmissible (couple transmissible qui devient alors inférieur à un seuil de couple prédéterminé, voire tend à s'annuler) ainsi qu'une augmentation de sa vitesse de rotation, un mode de fonctionnement « bloqué », dans lequel le différentiel à glissement limité agit pour transférer du couple d'entraînement, et donc de la motricité, à la roue la plus lente.

En pratique, le différentiel à glissement limité transmet ainsi à tout moment la majorité du couple d'entraînement (c'est-à-dire la plus grande part du couple d'entraînement qui est fourni au train roulant par le moteur du véhicule et que ledit train roulant est capable de transmettre à son tour au sol) à la roue la plus lente, qui présente la plus faible vitesse de rotation, laquelle roue correspond de fait, en cas de perte d'adhérence du train roulant, à la roue qui conserve le plus de prise (le plus d'adhérence) sur la route.

Concrètement, le blocage automatique du différentiel à glissement limité est obtenu en introduisant délibérément, par un agencement constructif idoine du différentiel, un couple de frottement de valeur non négligeable entre (au moins) un planétaire, porté par l'arbre de l'une des roues d'une part, et la cage du différentiel d'autre part. La cage du différentiel est quant à elle entraînée par l'arbre moteur, généralement grâce à un pignon fixé à l'extrémité dudit arbre moteur et qui engrène sur une couronne dentée fixée à, ou taillée dans, ladite cage.

Ce couple de frottement peut être généré par exemple par un mécanisme de compression à ressort, typiquement à rondelles élastiques.

Le couple de frottement peut également être obtenu par un mécanisme de couplage visqueux, comprenant des disques d'entraînement baignant dans l'huile.

Selon une autre possibilité connue, tel que cela est le cas pour les différentiels Torsen® (« TORque SENsitive »), on peut utiliser des planétaires (portés chacun par l'arbre de l'une des roues) en forme de vis sans fin, qui engrènent sur des satellites, portés par la cage du différentiel et également formés chacun par une vis sans fin. Les satellites associés à chacun des planétaires sont eux-mêmes couplés en rotation l'un avec l'autre par une denture droite. Le choix des angles d'hélice respectifs des planétaires et des satellites permet de rendre l'engrènement de chaque planétaire sur le satellite qui lui correspond difficilement réversible, de telles sorte que le planétaire peut facilement entraîner le satellite, mais que le satellite, porté par la cage, peut difficilement (voire quasiment pas) entraîner le planétaire.

Par commodité, on pourra noter C_{F} le couple de frottement, C_{T} le couple d'entraînement total transmis par le différentiel à l'ensemble des deux roues, C_{L} le couple qui sort sur la roue la plus lente et C_{R} le couple qui sort sur la roue la plus rapide.

Avantageusement, au sein du différentiel à glissement limité, le couple de frottement C_{F} a un effet d'entraînement sur la roue la plus lente, car la cage du différentiel a un mouvement plus rapide que l'arbre de la roue correspondante, ce qui fait que le couple de frottement C_{F} s'ajoute au couple C_{T}/2 transmis par le satellite au planétaire et à l'arbre de roue, si bien que le couple C_{L} sortant sur la roue lente vaut C_{L} = C_{T}/2 + C_{F}, tandis que le couple de frottement a un effet retardateur sur la roue la plus rapide, la cage ayant un mouvement plus lent que l'arbre de roue correspondant, si bien que le couple C_{R} sortant sur la roue rapide vaut C_{R} = C_{T}/2 - C_{F}. On observe ainsi une dissymétrie de couple entre la roue lente et la roue rapide : C_{L} - C_{R} = 2 C_{F}.

On notera également que le couple de frottement C_{F} peut de préférence augmenter lorsque le couple d'entraînement total C_{T} augmente.

Plus globalement, quel que soit le différentiel à glissement limité utilisé, on obtiendra sensiblement : C_{L} = k^{∗}C_{R} + C0, où k est un facteur appelé « Torque Bias Ratio » (rapport de polarisation en couple), en abrégé « TBR », qui correspond au rapport nominal entre le couple transmis par la roue qui transmet le plus de couple et le couple transmis par la roue qui transmet le moins de couple, et qui représente donc l'évolution (croissante) du couple de frottement C_{F} en fonction du couple d'entraînement total C_{T}, et C0 représente une pré-charge, correspondant au couple de frottement à vide du différentiel.

Avantageusement, le facteur k caractérisera la capacité du différentiel à glissement limité à transférer davantage de couple à la roue lente qu'à la roue rapide, et ce, que le différentiel soit soumis à une pré-charge C0 non nulle ou bien au contraire dépourvu de pré-charge C0 (comme cela peut être le cas dans les différentiels TORSEN®). Lorsque la pré-charge C0 est nulle, le différentiel à glissement limité transférera à la roue la plus lente k fois le couple transmis à la roue la plus rapide : C_{L} = k^{∗}C_{R}.

On remarquera par ailleurs que, lorsqu'il existe une pré-charge C0 non nulle, comme cela est notamment le cas dans les différentiels utilisant un mécanisme de compression à ressort, alors, même si la roue rapide perd totalement de l'adhérence et que le couple sortant sur la roue rapide C_{R} chute vers (voire atteint) zéro, il subsiste un couple sortant non nul sur la roue lente encore en prise : C_{L} = 2 C_{F} = C0 si bien que le différentiel continue de transmettre globalement à la route, essentiellement voire exclusivement *via* la roue lente, un couple moteur total valant au moins C_{T} = C_{L +} C_{R} = C_{L} + 0 = 2 C_{F} = C0.

Dans tous les cas, le blocage automatique permet de limiter, lorsque cela est nécessaire, l'action « différentielle » du différentiel à glissement limité afin de ne jamais priver totalement de motricité le train roulant.

On nommera « tarage » T% le taux de blocage du différentiel (exprimé en pourcent), qui se définit comme suit : T% = 100^{∗}(C_{L}-C_{R})/C_{T}.

Sachant que C_{T} = C_{R} + C_{L} = C_{R} (k+1) + C0, on a donc T% = 100^{∗}[C_{R}(k-1)+C0] / [C_{R}(k+1)+C0], soit, par simplification si l'on considère que la pré-charge C0 est généralement négligeable au regard des couples transmis : T% = 100^{∗}(k-1)/(k+1).

A titre d'exemple, si un différentiel TORSEN®, sans pré-charge, est dimensionné de telle sorte que k = 2,3, alors ledit différentiel transférera à la roue la plus lente 2,3 fois le couple transmis à la roue rapide, et son tarage (taux de blocage) sera de T% = 100^{∗}(2,3-1)/(2,3+1) = 39 %.

Concrètement, l'usage d'un différentiel à glissement limité procure de multiples avantages (dits « effets positifs »), parmi lesquels :
- l'amélioration de la motricité du véhicule, puisque l'on conserve, en cas de patinage de l'une des roues, une transmission de couple d'entraînement à l'autre roue, restée en prise avec le sol ;
- l'amélioration de l'accélération en ligne droite ;
- l'amélioration de la tenue de cap en virage, avec notamment une moindre tendance au sous-virage en phase d'accélération ;
- l'amélioration de la stabilité du véhicule en phase de freinage, notamment lors d'un freinage en courbe, ou bien encore lors d'un freinage en ligne droite sur une chaussée irrégulière.

Cependant, les inventeurs ont constaté que, dans le cas où l'on intègre un différentiel à glissement limité au train avant directionnel (et moteur) d'un véhicule, alors le différentiel à glissement limité interfère, dans certaines situations de vie du véhicule, et notamment lors des phases d'accélération, avec le fonctionnement du mécanisme de direction qui contrôle l'orientation des roues dudit train avant.

Plus particulièrement, la présence d'un différentiel à glissement limité au sein du train avant peut générer dans le mécanisme de direction des efforts et des variations d'efforts spécifiques, qui sont propres à l'activation du différentiel à glissement limité (c'est-à-dire propres à l'action de blocage du différentiel) et qui modifient le comportement de la direction, ainsi que le ressenti de la direction, c'est-à-dire la façon dont le conducteur du véhicule perçoit tactilement ladite direction, et donc interprète intuitivement le comportement du véhicule, à travers le volant de conduite.

Or, certains effets (dits « effets négatifs ») induits par le différentiel à glissement limité sont considérés comme indésirables, car ils perturbent les sensations du conducteur et peuvent, dans certains cas, nuire au confort de conduite, voire à la sécurité du véhicule et de ses occupants.

Ainsi, par exemple, en situation de virage, c'est-à-dire lorsque le véhicule suit une trajectoire courbe, et que le volant de conduite, ainsi que les roues, sont donc braqués dans le sens du virage, la présence (et l'entrée en action) du différentiel à glissement limité peut provoquer un « figeage » (gel) de la direction, c'est-à-dire une perte de l'action de rappel qui tend, en temps normal, et notamment en l'absence de différentiel à glissement limité, à recentrer naturellement la direction, et plus particulièrement à recentrer le volant de conduite, vers sa position « zéro » correspondant à la ligne droite.

En pratique, un tel figeage est provoqué par le transfert de couple d'entraînement qu'opère le différentiel à glissement limité depuis la roue située à l'intérieur du virage vers la roue située à l'extérieur du virage lorsque la roue intérieure commence à patiner et que la vitesse de rotation de ladite roue intérieure devient supérieure à la vitesse de rotation de la roue extérieure.

Un tel figeage peut notamment se produire, à titre d'exemple, dans la situation suivante.

Supposons que le véhicule est engagé en virage à droite. A vitesse (longitudinale) constante, il s'exerce dans le mécanisme de direction, de façon habituelle, un couple de rappel qui tend à rappeler le volant en position centrée, c'est-à-dire qui tire le volant vers la gauche (si bien que le conducteur doit exercer un effort dirigé vers la droite pour maintenir l'angle de braquage dudit volant). Le couple de rappel est dû à l'existence d'un couple d'auto-alignement, généré par l'action du sol sur le pneumatique de chaque roue braquée, et qui tend à rappeler (en lacet) les roues dans l'alignement du véhicule. Le couple d'entraînement servant à propulser le véhicule est par ailleurs principalement dirigé vers la roue la plus lente, c'est-à-dire vers la roue située à l'intérieur du virage, ici la roue droite.

Si le véhicule, toujours en virage, accélère, le couple de rappel ressenti au volant tend tout d'abord à augmenter. Toutefois, en raison de l'augmentation du couple d'entraînement d'une part, et de l'effet d'allègement de la roue intérieure avant qui est procuré par l'accélération (par l'accélération longitudinale qui tend à créer un transfert de masse depuis l'avant vers l'arrière du véhicule, et par l'accélération latérale qui, par la force centrifuge, tend à créer un transfert de masse depuis les roues intérieures vers les roues extérieures), on peut atteindre la limite d'adhérence de la roue intérieure avant (ici la roue avant droite), qui se met alors à patiner.

Le différentiel à glissement limité s'active alors (se bloque) pour transférer la plus grande partie du couple d'entraînement vers la roue externe (la roue avant gauche).

L'écart de couple ainsi créé entre la roue intérieure (ici la roue droite, dans le cadre d'un virage à droite), qui reçoit peu de couple d'entraînement, et la roue extérieure (la roue gauche) qui reçoit la majorité du couple d'entraînement, provoque l'apparition d'un couple de lacet, qui tend à entraîner la direction, et plus globalement le véhicule, dans le sens du virage (ici dans le sens horaire, dans un virage à droite).

De ce couple de lacet résulte une sensation de figeage de la direction.

Or, en cas de figeage de la direction, le volant ne se recentrant pas naturellement, et la perception du braquage étant en partie faussée par l'absence de ressenti, au niveau du volant de conduite, d'un couple d'auto-alignement (le conducteur ayant l'impression que le couple d'auto-alignement est nul), on court le risque d'une mauvaise évaluation du braquage, et/ou du maintien d'un angle de braquage inapproprié, ce qui peut bien entendu avoir une incidence sur la trajectoire du véhicule, et donc sur la sécurité des occupants dudit véhicule ou des autres usagers de la route.

Dans certains cas extrêmes, au-delà du figeage, on peut assister à un phénomène d' « avalement », c'est-à-dire à un auto-braquage de la direction, l'action du différentiel à glissement limité tendant à accentuer le braquage, c'est-à-dire à augmenter l'angle de braquage des roues, et plus globalement l'angle de braquage du mécanisme de direction, dans le sens du virage déjà engagé.

Par ailleurs, si le véhicule progresse sur une chaussée irrégulière, par exemple une route bosselée, sur laquelle les conditions d'adhérence varient rapidement et de façon relativement aléatoire et différente pour la roue gauche et la roue droite, si bien que la roue gauche et la roue droite tendent à patiner de manière alternative, alors le différentiel à glissement limité transfère tour à tour du couple vers la roue droite, puis vers la roue gauche, et ainsi de suite, ce qui provoque des remontées d'efforts alternés dans la direction, jusqu'au volant.

Ces remontées d'efforts, dues au basculement alterné, entre la roue gauche et la roue droite, du couple d'entraînement qui est distribué par le différentiel à glissement limité, peuvent être d'intensité et de fréquence très variables, et plus ou moins irrégulières.

Si le volant de conduite est tenu en mains par le conducteur, ces remontées d'efforts se traduisent par des secousses, aléatoires et d'intensité parfois relativement élevée, qui sont ressenties dans le volant de conduite.

De telle secousses peuvent rendre difficile, ou à tout le moins inconfortable, le maintien du volant dans l'orientation angulaire voulue, et plus globalement le maintien du véhicule sur la trajectoire voulue.

Si le volant de conduite est lâché, alors ces remontées d'efforts se traduisent par des oscillations angulaires et aléatoires du volant, dites « remontées angulaires », qui peuvent atteindre une amplitude relativement importante et ainsi déclencher des manoeuvres intempestives, susceptibles de faire dévier le véhicule de sa trajectoire.

On notera que le phénomène des remontées d'efforts est particulièrement sensible, et donc forte source de gêne, au voisinage de la ligne droite, c'est-à-dire lorsque le véhicule suit une trajectoire en ligne droite ou proche de la ligne droite, dans la mesure où, dans une telle configuration de conduite, l'intensité de l'assistance de direction est faible, voire sensiblement nulle, et ne peut donc pas résister à ces remontées d'efforts, ce qui rend le maintien du cap du véhicule particulièrement vulnérable auxdites remontées d'efforts.

Globalement, en raison de leurs effets négatifs, qui confèrent à la direction, et plus globalement au véhicule, un comportement tantôt inconfortable, tantôt déconcertant, susceptible de perturber le conducteur et de provoquer chez ce dernier des réactions inappropriées, surtout si ledit conducteur ne possède pas les réflexes d'un pilote expérimenté, les différentiels à glissement limité sont généralement considérés comme incompatibles avec une application de série sur les véhicules à traction avant.

Les objets assignés à l'invention visent par conséquent à remédier aux inconvénients susmentionnés et à proposer une solution qui permette de bénéficier des effets positifs typiques d'un différentiel à glissement limité tout en garantissant une conduite confortable, sûre, et intuitive, quel que soit le degré de maîtrise de pilotage que possède le conducteur.

Les objets assignés à l'invention sont atteints au moyen d'un dispositif de direction assistée destiné à la manoeuvre d'un train roulant de véhicule qui comprend une première roue à la fois directrice et motrice et une seconde roue à la fois directrice et motrice qui sont couplées l'une à l'autre par un différentiel à glissement limité agencé pour transmettre un couple d'entraînement auxdites première roue et seconde roue afin de propulser le véhicule, ledit différentiel à glissement limité étant conçu pour activer automatiquement, en cas de perte de synchronisme et/ou d'adhérence de l'une des première et seconde roues, un mode de fonctionnement dit « mode de blocage » dans lequel ledit différentiel à glissement limité transfère la majorité du couple d'entraînement vers la plus lente des première et seconde roues, ledit dispositif de direction assistée comprenant par ailleurs au moins un mécanisme de direction qui est agencé pour manoeuvrer les première et seconde roues afin de modifier leur angle de braquage, un volant de conduite qui permet à un conducteur de piloter ledit mécanisme de direction, ainsi qu'un moteur d'assistance qui vient en prise sur le mécanisme de direction et qui est commandé par au moins un module de gestion agencé pour élaborer une consigne d'assistance et appliquer ladite consigne d'assistance audit moteur d'assistance, ledit dispositif de direction assistée étant caractérisé en ce que le module de gestion de direction contient des lois de compensation qui interviennent dans l'élaboration de la consigne d'assistance de manière à intégrer dans ladite consigne d'assistance des composantes correctives permettant au moteur d'assistance de compenser certaines composantes d'effort, dites « composantes d'effort perturbatrices », qui sont induites dans le mécanisme de direction par l'activation du mode de blocage du différentiel à glissement limité, et ce de manière à procurer au conducteur un ressenti proche de celui d'un train roulant dépourvu de mode de blocage.

Avantageusement, l'invention propose donc de masquer virtuellement, par des lois d'assistance modifiées de façon appropriée, la présence du différentiel à glissement limité, en compensant, par une réaction active du moteur d'assistance, les effets négatifs dudit différentiel à glissement limité, de manière à rapprocher le comportement de la direction, et donc les sensations de conduite, des sensations procurées par un train roulant dépourvu de différentiel à glissement limité (c'est-à-dire de manière à rapprocher les sensations de conduite effectivement perçues par le conducteur des sensations que procurerait, dans les même conditions, un train roulant sensiblement identique mais qui serait équipé d'un différentiel conventionnel, au lieu d'un différentiel à glissement limité).

L'invention permet donc, par une intervention sélective du moteur d'assistance, de conserver d'une part concrètement les effets mécaniques positifs du différentiel à glissement limité, qui contribuent à améliorer la motricité et la tenue de route du véhicule, tout en atténuant d'autre part, virtuellement, c'est-à-dire dans le ressenti de la direction tel que ledit ressenti est perceptible au niveau du volant de conduite, les effets négatifs propres audit différentiel à glissement limité (c'est-à-dire les effets propres à l'activation automatique du mode de blocage dudit différentiel à glissement limité), tels que le figeage et les remontées d'efforts alternés.

Avantageusement, les nouveaux jeux de lois d'assistance propres à l'invention, qui intègrent des éléments de compensation destinés à contrer les effets négatifs induits par un différentiel à glissement limité, permettent d'entretenir sensiblement, de manière artificielle, la sensation de conduire un véhicule « normal », c'est-à-dire dépourvu de fonction de blocage automatique de son différentiel, et ce en particulier lorsque le véhicule concerné est un véhicule à traction avant.

En procurant un ressenti de conduite qui est similaire au ressenti d'un véhicule dépourvu de mode de blocage automatique du différentiel, de telle sorte que ledit ressenti est cohérent avec la perception globale et intuitive du comportement dynamique du véhicule par le conducteur, l'invention évite de perturber le conducteur habitué à conduire des véhicules à traction avant sans différentiel à glissement limité.

L'invention autorise ainsi une conduite instinctive, basée sur les réflexes habituels du conducteur, sans qu'il soit nécessaire pour ledit conducteur d'acquérir de nouveaux réflexes de pilotage spécifiques aux véhicules équipés de différentiel à glissement limité, et sans risque que le conducteur, qui serait induit en erreur par un ressenti inhabituel, adopte des réactions qui seraient inadaptées à la situation du véhicule, voire procède à des manoeuvres potentiellement dangereuses.

Avantageusement, la mise en oeuvre de l'invention est en outre particulièrement simple et peu onéreuse, puisqu'il suffit de programmer, ou au besoin de reprogrammer, la mémoire informatique du module électronique de gestion de la direction pour y intégrer les lois de compensation propres à l'invention.

A ce titre, on notera qu'il est facile d'envisager une gamme de véhicules à traction avant comprenant d'une part des modèles pourvus d'un différentiel conventionnel, et d'autre part des modèles pourvus d'un différentiel à glissement limité, tous les modèles utilisant un même dispositif commun de direction assistée, et notamment un même mécanisme de direction standardisé, mais se différenciant par le jeu de lois appliqué par le module de gestion de direction, qui dans un cas (en présence d'un différentiel conventionnel) contiendra (et appliquera) des lois d'assistance conventionnelles, et dans l'autre cas (en présence d'un différentiel à glissement limité) contiendra et appliquera des lois d'assistance modifiées intégrant des lois de compensation propres à compenser les effets négatifs induits par la présence du différentiel à glissement limité.

La rationalisation de la production de la gamme de véhicule s'en trouvera donc améliorée, puisqu'il suffira de sélectionner la programmation convenable du module de gestion pour adapter un même dispositif de direction assistée tantôt à un véhicule à différentiel conventionnel, tantôt à un véhicule à différentiel à glissement limité.

Dans l'absolu, pour limiter la diversité des lois d'assistance (et notamment pour faire l'économie de la mise au point de cartographies, ou « maps », distinctes) on pourrait même envisager de mettre au point les lois d'assistance, incluant les lois de compensation, sur un véhicule pourvu d'un différentiel à glissement limité, puis vérifier la portabilité de tout ou partie de telles lois d'assistance sur un véhicule pourvu d'un différentiel conventionnel (l'inverse n'étant bien entendu pas possible, dans la mesure où la présence d'un différentiel à glissement limité nécessite de prévoir des lois de compensation spécifiques pour garantir la prise en charge effective des effets négatifs induits par ledit différentiel à glissement limité, et ne permet donc pas de se satisfaire de lois d'assistance conventionnelles, insuffisantes à elles seules pour assurer une telle prise en charge).

D'autres objets, caractéristiques et avantages de l'invention apparaîtront plus en détail à la lecture de la description qui suit, ainsi qu'à l'aide des dessins annexés, fournis à titre purement illustratif et non limitatif, parmi lesquels :
La figure 1 illustre, selon une vue schématique de dessus, un véhicule à traction avant pourvu d'un différentiel à glissement limité et mettant en oeuvre un module de gestion selon l'invention pour compenser les effets négatifs dudit différentiel à glissement limité.
La figure 2 illustre, en trait plein, une loi de compensation selon l'invention destinée à atténuer des remontées d'efforts alternés, ladite loi s'exprimant ici par un gain de dérivée qui est ajusté en fonction du couple volant; cette même figure permet en outre de comparer visuellement la loi de compensation à une loi d'assistance conventionnelle (en trait pointillé) utilisable avec un train roulant dépourvu de différentiel à glissement limité.
La figure 3 illustre, en trait plein, une loi de compensation selon l'invention faisant évoluer le gain de dérivée en fonction de la vitesse du véhicule, par comparaison à une loi d'évolution (en trait pointillé) utilisable en l'absence de différentiel à glissement limité.
La figure 4 illustre, en trait plein, une loi de compensation de figeage, exprimée sous la forme d'une consigne de rappel en boucle ouverte, homogène à une consigne de couple moteur, qui évolue en fonction de l'écart angulaire entre la position instantanée du volant de conduite et la position centrale dudit volant, par comparaison à une loi (en trait pointillé) utilisable en l'absence de différentiel à glissement limité.
La figure 5 illustre, en trait plein, l'évolution du gain de rappel en boucle ouverte en fonction de la vitesse du véhicule, par comparaison à une loi (en trait pointillé) utilisable en l'absence de différentiel à glissement limité.
La figure 6 illustre, en trait plein, une loi de compensation de figeage, exprimée sous la forme d'une consigne de vitesse angulaire de rappel du volant, en boucle fermée, qui évolue en fonction de l'écart angulaire entre la position instantanée du volant de conduite et la position centrale dudit volant, par comparaison à une loi (en trait pointillé) utilisable en l'absence de différentiel à glissement limité.
La figure 7 illustre, en trait plein, l'ajustement du gain de rappel en boucle fermée en fonction de la vitesse du véhicule, par comparaison à une loi (en trait pointillé) utilisable en l'absence de différentiel à glissement limité.
La figure 8 illustre, en trait plein, l'ajustement du gain de rappel en boucle fermée en fonction du couple volant, par comparaison à une loi (en trait pointillé) utilisable en l'absence de différentiel à glissement limité.

L'invention concerne un dispositif 1 de direction assistée qui est destiné à la manoeuvre d'un train roulant 2 d'un véhicule 3.

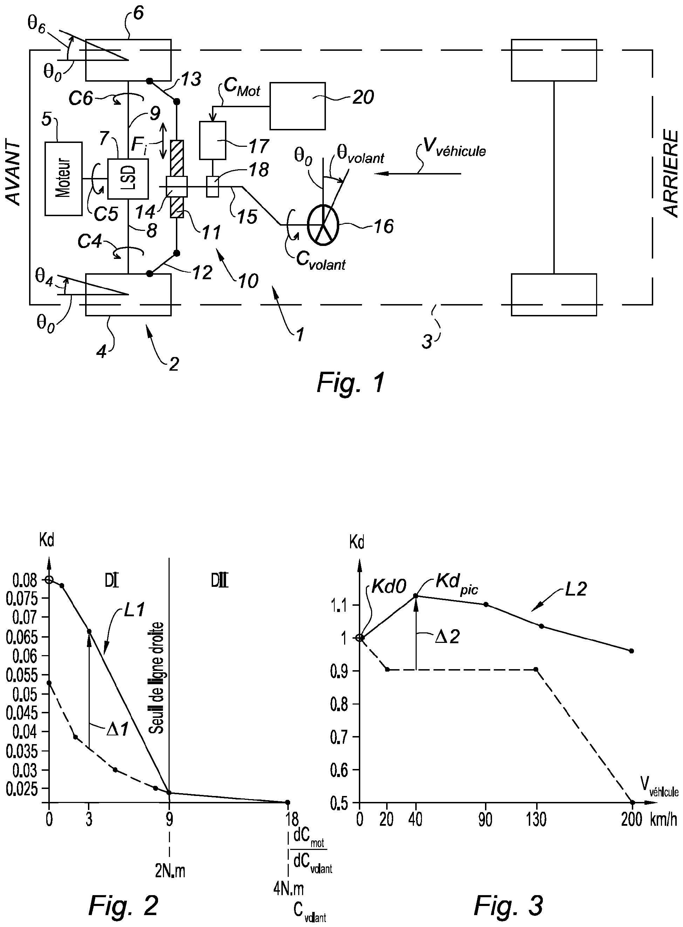

Tel que cela est illustré sur la figure 1, ledit train roulant 2 comprend une première roue 4, ici une roue gauche, qui est à la fois directrice, c'est-à-dire orientable en lacet sous la commande du dispositif de direction assistée 1, et motrice, c'est-à-dire agencée pour être entraînée par le moteur 5 destiné à la propulsion du véhicule 3.

Le train roulant 2 comprend également une seconde roue 6, ici une roue droite, qui est également à la fois directrice et motrice.

De façon particulièrement préférentielle, le train roulant 2 formera un train avant, situé dans la moitié avant du véhicule 3, de manière à assurer une traction avant dudit véhicule 3.

Selon une variante de réalisation préférentielle, le train roulant 2 avant pourra être le seul train moteur du véhicule 3, qui sera alors strictement un véhicule à traction avant (typiquement un véhicule à deux roues motrices avant, sur les quatre roues qui équipent ledit véhicule).

Ceci étant, il est également envisageable, en variante, d'appliquer l'invention au train avant d'un véhicule disposant d'une transmission intégrale, permanente ou temporaire.

La première roue 4 et la seconde roue 6 sont couplées l'une à l'autre par un différentiel à glissement limité 7, noté « LSD » pour « Limited Slip Differential » sur la figure 1, qui est agencé pour transmettre un couple d'entraînement C5, C4, C6 auxdites première roue 4 et seconde roue 6 afin de propulser le véhicule 3.

Par convention, on notera C5 le couple d'entraînement (total) qui est fourni, à l'instant considéré, par le moteur 5 au différentiel à glissement limité 7 et qui est ensuite transmis au sol par les première et seconde roues 4, 6.

De même, on notera C4 le couple affecté (transféré par le différentiel 7) à la première roue 4, c'est-à-dire le couple transmissible au sol par ladite première roue 4, et C5 le couple affecté (transféré par le différentiel 7) à la seconde roue 5, c'est-à-dire le couple transmissible au sol par ladite seconde roue 5.

En pratique, on aura donc (en négligeant les pertes) : C5 = C4 + C6.

Structurellement, le différentiel à glissement limité 7 pourra comprendre, de manière connue en soi, une cage équipée d'une couronne dentée qui est entraînée en rotation par un pignon moteur fixé sur l'arbre de sortie du moteur 5.

Chacune des première et seconde roue 4, 6 sera solidaire de son propre arbre, dit « arbre de roue » 8, 9, par lequel la roue 4, 6 reçoit son couple d'entraînement C4, C6.

L'arbre (gauche) 8 de la première roue 4 est coaxial à l'arbre (droit) 9 de la seconde roue 6 et coaxial à l'axe de rotation de la cage du différentiel 7, par rapport à laquelle lesdits arbres de roue 8, 9 s'articulent en pivot.

Chaque arbre de roue (respectivement gauche 8, et droit 9) porte un planétaire, conçu pour engrener sur au moins un satellite porté par la cage.

Selon l'invention, ledit différentiel à glissement limité 7 est conçu pour activer automatiquement, en cas de perte de synchronisme et/ou d'adhérence de l'une des première et seconde roues 4, 6, un mode de fonctionnement dit « mode de blocage » dans lequel ledit différentiel à glissement limité 7 transfère la majorité (c'est-à-dire plus de la moitié) du couple d'entraînement C5 vers la plus lente des première et seconde roues 4, 6.

Ainsi, en mode de blocage, si la vitesse de rotation de la première roue 4 est inférieure à la vitesse de rotation de la seconde roue 6, alors le couple C4 dirigé sur la première roue 4 sera strictement supérieur au couple C6 dirigé sur la seconde roue, qui recevra et transmettra donc plus de la moitié du coupe total d'entraînement, c'est-à-dire que l'on aura : C4 > C6, et C4 > C5/2.

Plus particulièrement, le déclenchement de la fonction de limitation de glissement du différentiel, c'est-à-dire l'activation du mode de blocage, revient, comme cela a été décrit plus haut, à introduire au sein du différentiel 7, entre la cage et les arbres de roue 8, 9, un couple de frottement C_{F} d'une valeur non négligeable, suffisante en cas de perte d'adhérence de l'une des roues 4, 6 pour forcer un transfert de motricité à l'autre roue 6, 4, et plus globalement pour conserver une motricité du véhicule.

En pratique, en mode de blocage, si l'on note k le rapport de polarisation en couple (« BTR ») et C0 l'éventuelle pré-charge (qui peut être nulle, notamment dans un différentiel Torsen®, ou bien au contraire non nulle), le différentiel 7 induit une dissymétrie de couple entre les roues 4, 6, la roue 4 la plus lente recevant un couple majoritaire C4 = k^{∗}C6 + C0, avec typiquement C0 = 2^{∗}C_{F}, voire un couple majoritaire valant C4 = k^{∗}C6 en l'absence de pré-charge C0, tandis que la roue la plus rapide (typiquement la roue en perte d'adhérence) 6 reçoit un couple minoritaire C6 = 1/k ^{∗} (C4 - C0), et plus particulièrement C6 = 1/k ^{∗} C4.

L'activation du mode de blocage, c'est-à-dire l'introduction de la dissymétrie de couple entre les première et seconde roues 4, 6 (dissymétrie qui est donc ici égale à C4 - C6 = (k-1)^{∗}C6 + C0, et plus particulièrement à (k-1)^{∗}C6 en l'absence de pré-charge, ce qui peut par exemple correspondre à un taux de blocage T% = 39 % si k = 2,3 comme indiqué plus haut), se produit automatiquement en cas de perte de synchronisme entre la première roue 4 et la seconde roue 6 liées par le différentiel 7, c'est-à-dire lorsqu'une roue 4 commence à tourner à une vitesse de rotation différente de la vitesse de rotation de l'autre roue 6, notamment en raison d'une modification des conditions d'adhérence respectives desdites roues 4, 6 sur le sol (et donc d'une modification de l'intensité du couple transmissible respectivement par chacune des roues 4, 6) et/ou en raison d'une entrée en virage.

En pratique, en cas de perte d'adhérence d'une roue, ici la seconde roue 6 (dite aussi roue « folle »), le mode de blocage pourra revenir à solidariser provisoirement en rotation (dans la limite des possibilités offertes par le couple de frottement C_{F}) la cage du différentiel 7 avec le planétaire et l'arbre 8 de l'autre roue 4, et également avec l'arbre 9 de ladite roue 6 folle.

Structurellement, le différentiel à glissement limité 7 pourra utiliser toute technologie adaptée à l'activation automatique d'un mode de blocage (c'est-à-dire à l'introduction automatique d'un couple de frottement C_{F}).

Ledit différentiel 7 pourra ainsi être par exemple un différentiel pourvu d'un mécanisme à ressort (qui exerce de préférence une contrainte axiale sur les planétaires), et notamment un mécanisme à rondelles-ressorts, ou bien un différentiel pourvu d'un mécanisme visco-coupleur (à disques), ou bien encore un différentiel à mécanisme à vis sans fin de type Torsen®, au sein duquel, de manière connue en soi, on trouve deux planétaires distincts, associés chacun à un arbre de roue, et qui sont formés tous les deux par des vis sans fin de même orientation, chacune desdites vis sans fin engrenant sur la portion centrale, à denture hélicoïdale (de forme conjuguée à celle du planétaire, et dont le pas d'hélice définit le couple de frottement C_{F}), d'au moins un satellite correspondant, ledit satellite étant lui-même porté par la cage, et au sein duquel les deux satellites associés respectivement au planétaire gauche et au planétaire droit viennent en outre en prise l'un sur l'autre, par leurs portions extrémales aménagées en roues dentées.

L'utilisation d'un différentiel de type Torsen® sera particulièrement préférée, dans la mesure où d'une part un tel différentiel permet, par sa conception robuste, la transmission de couples élevés, où d'autre part il est peu sensible à l'usure, et où enfin un tel différentiel est particulièrement réactif, puisqu'il active instantanément le mode de blocage en cas de nécessité, sans laisser la roue en perte d'adhérence s'emballer (cette réactivité expliquant également qu'un différentiel à glissement limité Torsen® soit particulièrement sujet à un comportement brusque, induisant des réactions négatives assez soudaines et d'intensité assez élevée).

Quelle que soit la technologie de différentiel à glissement limité employée, la valeur de tarage T%, c'est-à-dire le rapport entre la différence (maximale) de couple entre la première roue 4 et la seconde roue 6 d'une part et le couple d'entraînement total d'autre part, soit T% = (|C4-C6|)/C5 ^{∗} 100, qui pourra plus particulièrement valoir ici T% = (|k-1|^{∗}C6)/((k+1)^{∗}C6) ^{∗} 100, sera choisie supérieure ou égale à 15 %, supérieure ou égale à 20 %, supérieure ou égale à 30 %, voire supérieure ou égale à 35 %, à 40 % ou même à 50 %.

On notera à ce titre que la mise en oeuvre d'une compensation des effets négatifs du différentiel à glissement limité 7 selon l'invention permet de choisir, y compris pour un véhicule « de tourisme » destiné à un usage routier conventionnel, une valeur de tarage T% particulièrement élevée, qui peut éventuellement atteindre, voire dépasser, les 60 % ou même les 80 %, voire sensiblement les 100 % (dans le cas par exemple d'un différentiel piloté, dans lequel la valeur du facteur k tend vers l'infini), c'est-à-dire qui peut atteindre une valeur, ou se situer dans une plage de valeurs, habituellement réservée(s) aux véhicules dit « de piste » (« off-road »), et ce sans pour autant que la valeur de tarage T% élevée cause une gêne au conducteur.

Ici encore, la technologie propre au Torsen® permettra par exemple de fixer un tarage T% compris entre 15%, voire 30 %, ou 35 % (valeur basse) et 50 % (valeur haute).

Par ailleurs, tel que cela est illustré sur la figure 1, le dispositif de direction assistée 1 selon l'invention comprend également au moins un mécanisme de direction 10 qui est agencé pour manoeuvrer les première et seconde roues 4, 6 afin de modifier l'angle de braquage θ₄, θ₆ desdites roues 4, 6 (c'est-à-dire l'orientation en lacet respective de chaque roue 4, 6 par rapport à la direction longitudinale avant-arrière du véhicule 3).

Ledit mécanisme de direction 10 pourra par exemple comprendre une crémaillère 11, guidée en translation (ici selon un axe gauche-droite, transverse à la direction longitudinale du véhicule) dans un carter de direction solidaire du véhicule 3, et dont chacune des extrémités est reliée à une biellette de direction (respectivement une biellette gauche 12 et une biellette droite 13) qui est connectée à un porte-fusée portant la roue 4, 6 correspondante.

La crémaillère 11 sera avantageusement entraînée par un pignon de manoeuvre 14, fixé à une extrémité d'une colonne de direction 15.

Tel que cela est visible sur la figure 1, le dispositif de direction assistée 1 comprend également un volant de conduite 16 qui permet à un conducteur de piloter le mécanisme de direction 10.

Plus particulièrement, le volant de conduite 16 sera fixé sur la colonne de direction 15, à une extrémité de ladite colonne de direction qui est opposée à l'extrémité sur laquelle est fixé le pignon de manoeuvre 14, de sorte à permettre un actionnement manuel du mécanisme de direction 10.

Le dispositif de direction assistée 1 comprend en outre un moteur d'assistance 17 qui vient en prise sur le mécanisme de direction 10, de préférence par l'intermédiaire d'un réducteur 18, tel qu'un réducteur à roue tangente et vis sans fin.

Le moteur d'assistance 17 sera, de façon particulièrement préférentielle, formé par un moteur électrique, à double sens de rotation. L'utilisation d'un moteur électrique simplifiera en effet considérablement la mise en oeuvre des lois de compensation selon l'invention, tout en permettant la réalisation d'un dispositif de direction 1 léger et peu encombrant.

Le moteur d'assistance 17 pourra venir en prise sur la colonne de direction 15, en amont du pignon de manoeuvre 14 et de la crémaillère 11, pour former un mécanisme dit « à simple pignon », tel que cela est illustré sur la figure 1, ou bien encore, en variante, venir en prise directement sur la crémaillère 11, par l'intermédiaire d'un second pignon ou d'une vis à billes distinct(e) du pignon de manoeuvre 14, pour former un mécanisme dit « à double pignon ».

Le moteur d'assistance 17 est commandé par au moins un module de gestion 20 qui est agencé pour élaborer une consigne d'assistance C_{MOT} et appliquer ladite consigne d'assistance C_{MOT} audit moteur d'assistance 17.

La consigne d'assistance C_{MOT} correspond au couple-cible que l'on souhaite faire délivrer, à l'instant considéré, par le moteur d'assistance 17. En pratique, la consigne d'assistance C_{MOT} peut donc correspondre à une consigne de courant selon laquelle on alimente électriquement le moteur d'assistance 17.

De façon conventionnelle, le module de gestion 20 peut contenir, et appliquer, des lois d'assistance « classique » permettant au moteur d'assistance 17 d'assister le conducteur dans la manoeuvre de la direction, notamment en amplifiant l'effort exercé manuellement par le conducteur sur le volant lorsque le conducteur souhaite tourner le volant (et donc braquer la direction) vers la gauche ou au contraire vers la droite.

Le module de gestion 20 pourra être formé par un circuit électronique, une carte électronique, un calculateur (ordinateur), un automate programmable, ou tout autre dispositif équivalent, qui pourra présenter une structure de commande physique, liée au câblage de ses composants électroniques, et/ou, de préférence, une structure de commande virtuelle, définie par une programmation informatique.

Selon l'invention, le module de gestion de direction 20 contient des lois de compensation L1, L2, L3, L4, L5, L6, L7 qui interviennent dans l'élaboration de la consigne d'assistance C_{MOT} de manière à intégrer dans ladite consigne d'assistance C_{MOT} des composantes correctives Δ1, Δ2, Δ3, Δ4, Δ5, Δ6, Δ7 permettant au moteur d'assistance 17 de compenser certaines composantes d'effort Fi, dites « composantes d'effort perturbatrices », qui sont induites dans le mécanisme de direction 10 par l'activation du mode de blocage du différentiel à glissement limité 7, et ce de manière à procurer au conducteur un ressenti proche de (voire quasi-identique à) celui d'un train roulant 2 dépourvu de mode de blocage.

Avantageusement, les lois de compensation L1, L2, L3... s'opposent à un ou plusieurs effets négatifs du différentiel à glissement limité 7, propres à l'activation du mode de blocage dudit différentiel 7, c'est-à-dire que lesdites lois de compensation s'opposent aux conséquences, sur le comportement du mécanisme de direction 10, des efforts (et variations d'efforts) qui sont spécifiquement provoqués par l'enclenchement de la fonction de limitation de glissement du différentiel 7 et qui interfèrent avec les actions de commande dudit mécanisme de direction 10 (actions par lesquelles on modifie ou l'on maintient l'angle de braquage pour contrôler le cap du véhicule) ainsi qu'avec le ressenti dudit mécanisme de direction 10 par le conducteur.

Ainsi, l'intervention automatique du mode de blocage, notamment à l'occasion de phases d'accélération (longitudinale) du véhicule décidées par le conducteur, n'est désormais que peu perceptible tactilement, voire plus du tout perceptible tactilement, par le conducteur, à travers le volant de conduite 16.

En d'autres termes, le module de gestion 20, grâce à ses lois de compensation L1, L2, L3..., agit comme une interface de filtrage dynamique qui permet, par son action compensatrice qui intervient concomitamment au déclenchement du mode de blocage du différentiel 7, de simuler et de restituer virtuellement, sensiblement en temps réel, en toutes circonstances, et notamment dans les phases d'accélération du véhicule et/ou dans les phases de perte d'adhérence d'une roue motrice 4, 6, le comportement d'un mécanisme de direction 10 associé à un train roulant « conventionnel », dépourvu de différentiel à glissement limité.

En masquant au conducteur les perturbations qui sont provoquées par l'enclenchement du mode de blocage et qui sont jugées indésirables, telles que le figeage du volant 16 en courbe ou bien les remontées d'efforts alternés, l'invention procure au conducteur des conditions de conduite très intuitives, avec des sensations similaires à celles qu'il éprouve lorsqu'il conduit un véhicule dont le train avant (moteur) est dépourvu de différentiel à glissement limité.

Les lois de compensation L1, L2, L3..., de même que les lois d'assistance « classiques », seront stockées dans une mémoire non volatile du module de gestion 20.

Des exemples de lois de compensation L1, L2, L3... vont maintenant être décrits plus en détails, en référence aux figures 2 à 8.

Sur lesdites figures 2 à 8, on a représenté en trait plein les lois de compensation, applicables au train roulant 2 directeur équipé d'un différentiel à glissement limité 7, et en trait pointillé, à titre illustratif, des lois d'assistance conventionnelles, qui sont sensiblement dépourvues de fonctions compensatrices capable de compenser des effets négatifs induits par le différentiel à glissement limité.

Ces lois d'assistance conventionnelles (en pointillés) sont en pratique applicables à un train roulant 2 dépourvu de fonction de blocage automatique de son différentiel, mais inadaptées, car insuffisantes, à la gestion d'un différentiel à glissement limité 7 au sens de l'invention.

Par simple convention de représentation graphique et par commodité de description, on assimile, sur les graphiques des figures 2 à 8, la composante corrective Δ1, Δ2, Δ3, Δ4, Δ5, Δ6, Δ7 introduite (respectivement) par la loi de compensation correspondante L1, L2, L3, L4, L5, L6, L7 (et qui intervient donc dans l'élaboration de la consigne d'assistance C_{MOT}) à la différence de valeur, représentée graphiquement par une flèche, entre le tracé de la loi conventionnelle (en trait pointillé) et le tracé de la loi de compensation propre à l'invention L1, L2, L3... (en trait plein), ce qui revient à assimiler la différence (écart graphique) entre ces deux types de loi à la composante corrective qui est effectivement apportée à la consigne d'assistance C_{MOT} et qui est, en fait, induite par ladite différence (écart graphique) entre les deux types de lois.

On peut ainsi visualiser en quelque sorte les lois de compensation L1, L2, L3..., et plus particulièrement les cartographies (« maps ») définissant lesdites lois de compensation, comme la somme d'une loi de base, conventionnelle, et d'une composante additionnelle qui modifie la loi de base (en se superposant à cette dernière) et permet de transposer ladite loi de base en une loi de compensation, en y intégrant les éléments nécessaires à la génération de la composante corrective Δ1, Δ2, Δ3... destinée à, et donc nécessaire et suffisante pour, s'opposer aux effets négatifs du différentiel à glissement limité.

Par rapport à la loi conventionnelle de base (en trait pointillé), la loi de compensation L1, L2, L3... selon l'invention contient et apporte donc en quelque sorte une composante corrective supplémentaire Δ1, Δ2, Δ3... qui s'ajoute (algébriquement) à la composante conventionnelle de base, et donc à la consigne d'assistance, de sorte à compenser les effets négatifs générés par le différentiel à glissement limité 7 par rapport à un différentiel conventionnel.

De préférence, parmi les lois de compensation, on trouve au moins une loi L1, L2 d'atténuation des remontées d'efforts alternés, qui génère des composantes correctives Δ1, Δ2 dites « anti-remontées » qui s'opposent aux composantes d'effort perturbatrices provoquées par des alternances de transferts majoritaires de couple d'entraînement C4, C6 entre la première roue 4 et la seconde roue 6.

On peut ainsi amortir les secousses générées par les renversements qui surviennent dans la distribution majoritaire du couple d'entraînement C5, le mode de blocage ayant pour effet de diriger alternativement la majorité dudit couple d'entraînement C5 (par exemple un couple égal à C5/2 + C_{F}) tantôt vers la première roue 4, tantôt vers la seconde roue 6, au gré des fluctuations d'adhérence respectives desdites roues 4, 6, en favorisant toujours la roue la plus lente, qui présente, à l'instant considéré, la meilleure adhérence.

Préférentiellement, la loi d'atténuation des remontées d'efforts alternés L1, L2 fait intervenir une composante corrective anti-remontées dite « composante de dérivée » Δ1, Δ2 qui est élaborée en multipliant la valeur de la dérivée temporelle dCᵥₒₗₐₙₜ/dt du couple volant dCᵥₒₗₐₙₜ par un gain, dit « gain de dérivée » Kd.

Le couple volant Cᵥₒₗₐₙₜ est, tel que cela est illustré sur la figure 1, le couple qui est exercé par le conducteur sur volant de conduite 16, à l'encontre du mécanisme de direction 10, ici à l'encontre de la colonne de direction 15 et de la crémaillère 11, et, selon les circonstances, à l'encontre du moteur d'assistance 17.

Ledit couple volant Cᵥₒₗₐₙₜ peut être mesuré au moyen d'un capteur de couple, par exemple un capteur de couple magnétique, ou électromagnétique, absolu ou incrémental, analogique ou numérique, qui sera sensible aux déformations élastique d'une barre de torsion interposée entre le volant 16 et la colonne de direction 15.

Avantageusement, l'utilisation d'une composante corrective Δ1, Δ2 proportionnelle (par le gain de dérivée Kd) à la dérivée temporelle du couple volant dCᵥₒₗₐₙₜ/dt permet de prendre en considération, tant en fréquence qu'en intensité, les variations du couple volant Cᵥₒₗₐₙₜ dans le temps, c'est-à-dire de prendre en considération les secousses susceptibles d'affecter le volant 16.

Par conséquent, les lois anti-remontées L1, L2 faisant intervenir des composantes de dérivée permettent de réagir quasiment instantanément aux variations de couple volant, en générant une composante corrective opposée à l'effort Fi à l'origine de la secousse.

Avantageusement, ladite composante corrective Δ1, Δ2, obtenue en fonction de la dérivée de couple volant, est délivrée par le moteur d'assistance 17 d'autant plus vite et d'autant plus fort que le taux de variation du couple volant (et donc la valeur de la dérivée temporelle de couple volant) est élevé.

Ainsi, plus la remontée d'effort Fi provoquée par le différentiel 7 est brusque, plus la composante corrective anti-remontée Δ1, Δ2 est puissante, pour contrer efficacement ladite remontée.

Les lois de compensation L1, L2 anti-remontées pourront être conçues de manière à ce que, malgré la présence d'un différentiel à glissement limité 7, et en particulier lors de l'activation du mode de blocage dudit différentiel 7 et/ou lors d'alternances dans la répartition majoritaire du couple d'entraînement C5 d'une roue à l'autre, le couple volant Cᵥₒₗₐₙₜ ressenti au volant 16, et plus particulièrement le maximum du pic de couple volant induit par une remontée d'effort alternée, reste inférieur ou égal à une valeur maximale admissible, dite « valeur de plafond ».

Ainsi, en particulier, en aucune circonstance le différentiel à glissement limité 7 ne pourra de lui-même surpasser l'effort normal de maintien du volant que peut exercer manuellement un conducteur « moyen », si bien que le déclenchement du mode de blocage du différentiel 7 ne pourra forcer la manoeuvre de la direction à l'encontre de la volonté du conducteur.

En d'autres termes, le différentiel à glissement limité 7 sera avantageusement suffisamment modéré par les lois de compensation L1, L2 pour ne pas pouvoir prendre le conducteur en défaut, et notamment pour ne pas provoquer un lâcher accidentel du volant ou un entraînement accidentel du bras qui exposerait le conducteur à une entorse.

Ceci étant, la loi d'atténuation des remontées d'efforts alternés L1, L2 (par composante corrective de dérivée), bien que conçue pour niveler voire « gommer » les effets de retours de force induits par l'activation du blocage du différentiel 7, restera toutefois dimensionnée de manière à ne pas filtrer totalement toutes les remontées d'effort liées à l'interaction des roues 4, 6 avec le sol, et ce de manière à ne pas priver le conducteur de tout ressenti de la route à travers le volant 16 (« road feeling »).

De préférence, tel que cela est illustré par la loi notée L1 sur la figure 2, la loi d'atténuation des remontées d'efforts alternés L1, L2 comprend une loi de compensation dite « première fonction d'adaptation » L1, selon laquelle le gain de dérivée Kd augmente lorsque le couple volant Cᵥₒₗₐₙₜ, exercé (par le conducteur) sur le volant de conduite 16, descend sous un seuil prédéterminé, dit « seuil de ligne droite », qui indique que le véhicule 3 suit une trajectoire proche de la ligne droite.

On notera que, de manière équivalente, cette même loi (première fonction d'adaptation) L1 peut prévoir que le gain de dérivée Kd augmente lorsque le gradient d'assistance dC_{Mot}/dCᵥₒₗₐₙₜ, qui représente à l'instant considéré la variation dC_{Mot} du couple d'assistance délivré par le moteur d'assistance 17 (ledit couple d'assistance étant ici assimilable à la consigne d'assistance C_{Mot} appliquée audit moteur d'assistance 17) rapportée à la variation correspondante du couple volant dCᵥₒₗₐₙₜ, descend sous un seuil prédéterminé, dit « seuil de ligne droite », qui indique que le véhicule 3 suit une trajectoire proche de la ligne droite.

Pour comprendre, il suffit de considérer que, si l'on représente graphiquement une loi (cartographie) d'assistance de base sous la forme d'une courbe qui à chaque valeur de couple volant Cᵥₒₗₐₙₜ associe une valeur correspondante de couple d'assistance (consigne d'assistance) C_{Mot}, alors le gradient d'assistance dC_{Mot}/dCᵥₒₗₐₙₜ correspond graphiquement à la pente de ladite courbe au point de fonctionnement (couple volant, consigne d'assistance) considéré.

Dans la mesure où l'effort total de braquage (incluant l'effort manuel du conducteur et l'effort d'assistance délivré par le moteur d'assistance 17), et par conséquent l'effort d'assistance (de base), qu'il est nécessaire de fournir pour maintenir ou accentuer un angle de braquage θ₄, θ₆ est en principe d'autant plus fort que l'angle de braquage est élevé, et donc que le couple Cᵥₒₗₐₙₜ exercé au niveau du volant est élevé (car plus un virage est prononcé, plus il faut exercer un effort de traction élevé sur le mécanisme de direction dans le sens correspondant pour faire braquer le véhicule), le gradient d'assistance dC_{Mot}/dCᵥₒₗₐₙₜ, qui reflète l'effet de démultiplication procuré par l'assistance (de base) de direction, renseigne, de fait, sur l'intensité du braquage, c'est-à-dire permet de quantifier dans quelle mesure le véhicule s'éloigne ou se rapproche d'une progression en ligne droite.

Ainsi, plus le gradient d'assistance est élevé (en valeur absolue), plus le braquage est intense et la trajectoire du véhicule incurvée, plus le gradient est faible, c'est-à-dire proche de zéro, plus le véhicule se rapproche d'une trajectoire rectiligne.

Selon une autre possibilité, équivalente aux deux précédentes, la première fonction d'adaptation L1 pourra prévoir que, si le dispositif de direction 1 comprend une crémaillère de direction 11, sur laquelle s'exerce effort longitudinal de traction dit « effort de crémaillère », ledit effort de crémaillère étant représentatif de la résistance que les roues 4, 6, et plus particulièrement les pneumatiques, opposent aux manoeuvres de braquage, alors le gain de dérivée Kd pourra augmenter lorsque ledit effort de crémaillère descend sous un seuil prédéterminé, dit « seuil de ligne droite », qui indique que le véhicule 3 suit une trajectoire proche de la ligne droite.

L'effort de crémaillère pourra être estimé ou mesuré par tout moyen approprié, et par exemple estimé à partir de données internes du dispositif de direction (notamment à partir du couple volant exercé par le conducteur sur le volant de conduite 16, du couple délivré par le moteur d'assistance 17, et de la vitesse de rotation de l'arbre dudit moteur d'assistance).

Quelle que soit la variable utilisée (couple volant, gradient d'assistance, effort de crémaillère, ou toute autre variable équivalente), ici en abscisse sur la figure 2, pour quantifier la mesure dans laquelle la trajectoire du véhicule se rapproche d'une ligne droite ou au contraire s'incurve, on pourra définir deux domaines de la loi de compensation (première fonction d'adaptation) L1, à savoir un premier domaine DI dit « de proximité de la ligne droite », situé en deçà du seuil de ligne droite susmentionné, et un second domaine DII, dit « d'éloignement de la ligne droite », situé au-delà dudit seuil de ligne droite.

Dans tous les cas, tel que cela est illustré sur la figure 2, le gain de dérivée Kd est plus faible dans le second domaine d'éloignement de la ligne droite DII que dans le premier domaine DI, et augmente significativement (ici sensiblement linéairement) au fur et à mesure que l'on se rapproche de la ligne droite.

Ceci s'explique par le fait que la prise de virage requiert un effort de manoeuvre plus élevé que le maintien au voisinage de la ligne droite, si bien que l'assistance fournie par le moteur d'assistance 17 est d'autant plus faible que l'on se rapproche de la ligne droite, et que la direction est donc d'autant plus vulnérable aux remontées d'effort que l'on est proche de la ligne droite.

La compensation (ici par la dérivée) des remontées d'efforts par la loi (première fonction d'adaptation) L1 augmente donc au fur et à mesure que l'on se rapproche de la ligne droite.

A l'inverse, en situation de braquage prononcé (c'est-à-dire dans le second domaine DII), l'assistance motorisée est forte, au regard des remontées d'efforts prévisibles liées au blocage du différentiel 7, et la direction est donc peu sensible auxdites remontées d'efforts.

A titre indicatif, le seuil de ligne droite pourra être fixé à une valeur comprise entre 1 N.m et 3 N.m, et par exemple de l'ordre de 2 N.m tel que cela est illustré sur la figure 2, dans le cas où l'on utilise le couple volant Cᵥₒₗₐₙₜ comme variable de référence.

Par ailleurs, on notera que, dans le premier domaine DI proche de la ligne droite, la loi de compensation L1 prévoit un gain de dérivée Kd qui est strictement supérieur au gain de dérivée utilisé en l'absence de compensation (défini par la loi conventionnelle représentée en trait pointillé), et qui présente une croissance plus rapide, au fur et à mesure que l'on se rapproche de la ligne droite (c'est-à-dire de l'abscisse zéro).

De préférence, tel que cela est illustré par la loi notée L2 sur la figure 3, la loi d'atténuation des remontées d'efforts alternés L1, L2 comprend une loi de compensation dite « seconde fonction d'adaptation » L2, selon laquelle le gain de dérivée Kd est adapté en fonction de la vitesse longitudinale du véhicule V_{véhicule}.

De préférence, la seconde fonction d'adaptation L2 présente, tel que cela est illustré sur la figure 3, un maximum Kd_{pic} qui est situé à une abscisse de vitesse V_{véhicule} comprise entre 35 km/h et 90 km/h, de préférence entre 35 km/h et 50 km/h, et par exemple sensiblement égale à 40 km/h.

Plus globalement, la seconde fonction d'adaptation L2 présente de préférence, dans une plage de vitesses qui s'étend entre 35 km/h et 50 km/h, voire plus largement entre 20 km/h, voire 10 km/h (valeur basse) et 90 km/h voire 130 km/h (valeur haute), des valeurs de gain de dérivée Kd, parmi lesquelles le maximum Kd_{pic}, qui sont (de préférence toutes) supérieures à une valeur à l'origine Kd₀ qui correspond à la valeur du gain de dérivée à vitesse nulle (0 km/h).

De préférence, la seconde fonction d'adaptation L2 sera globalement concave, et présentera à cet effet au moins un domaine croissant, entre la valeur à l'origine Kd₀ qui correspond à la valeur du gain de dérivée à vitesse nulle, et le maximum Kd_{pic} qui est situé à une abscisse de vitesse V_{véhicule} comprise entre 35 km/h et 90 km/h, de préférence entre 35 km/h et 50 km/h, et par exemple sensiblement égale à 40 km/h, puis un domaine décroissant au-delà dudit maximum Kd_{pic} (c'est-à-dire pour les abscisses de vitesse supérieurs à l'abscisse de vitesse du maximum Kd_{pic}).

Avantageusement, la seconde fonction d'adaptation L2 permet de maximiser le gain de dérivée Kd dans une plage de vitesses (typiquement entre 35 km/h, voire 40 km/h, et 90 km/h) dans laquelle le véhicule est particulièrement susceptible d'être exposé à des accélérations importantes et à des valeurs de couple d'entraînement C5, C4, C6 élevées, de nature à déclencher le blocage du différentiel 7 et à induire les effets négatifs les plus marqués.

En d'autres termes, la seconde fonction d'adaptation L2 permet de maximiser le gain de dérivée Kd dans une plage de vitesses du véhicule V_{véhicule} qui est caractéristique de situations de vie du véhicule dans lesquelles le couple (dit aussi « couple à la roue ») C4 affecté à la roue gauche 4, et/ou respectivement le couple C6 affecté à la roue droite 6, est maximal, c'est-à-dire dépasse un seuil prédéterminé proche de la valeur maximale que le véhicule peut matériellement délivrer.

Concrètement, cette plage de vitesses dans laquelle le couple à la roue C4, C6 correspond à un ensemble de combinaisons particulières du régime du moteur 5 d'une part, et du rapport de vitesse enclenché d'autre part, qui favorisent la transmission d'un couple élevé.

Typiquement, cette plage de vitesses pourra couvrir un domaine d'utilisation dans lequel le second, le troisième, voire le quatrième rapport de la boîte de vitesse est engagé, et dans lequel le conducteur est susceptible d'engager des accélérations soutenues, notamment en sortie de virage ou pour s'engager dans le flot de la circulation.

En particulier, un pic de gain de dérivée Kd_{pic} pourra être observé au voisinage de 40 km/h, ce qui correspond typiquement au début d'une phase de forte accélération avec le second rapport de vitesse enclenché, c'est-à-dire de forte sollicitation des roues motrices 4, 6 et donc de risque ponctuel de perte d'adhérence.

On notera par ailleurs que la loi d'atténuation des remontées d'efforts alternés, notée par commodité « L1, L2 », peut faire intervenir la première fonction d'adaptation L1, ou la seconde fonction d'adaptation L2, ou bien, de préférence, à la fois la première et la seconde fonction d'adaptation L1, L2.

Par exemple, le gain de dérivée Kd qui sera effectivement utilisé par la loi d'atténuation des remontées d'efforts alternés L1, L2 pourra correspondre au produit des coefficients (composantes de gains) issus respectivement de la première fonction d'adaptation L1 et de la seconde fonction d'adaptation L2.

Ainsi, dans l'exemple fourni, l'ajustement du gain de dérivée Kd proposé par la seconde fonction d'adaptation L2 représentée sur la figure 3 peut avantageusement être utilisé comme un coefficient multiplicateur destiné à venir pondérer (et plus particulièrement à amplifier, lorsque la valeur est strictement supérieure à 1, tel que cela est ici le cas entre 10 km/h et 130 km/h), la valeur initiale de gain de dérivée Kd déterminée, en fonction du couple volant (et plus globalement en fonction de l'éloignement de la ligne droite), à partir de la première fonction d'adaptation L1 représentée sur la figure 2.

On notera également que la seconde fonction d'adaptation L2 spécifiquement adaptée à la compensation des remontées d'efforts alternés propose, ici encore, et tel que l'illustre, sur la figure 3, la composante corrective Δ2, un gain de dérivée Kd supérieur à celui offert par la loi conventionnelle (représentée en trait pointillé).

En outre, alors que la loi conventionnelle (en trait pointillé) suit une fonction continûment décroissante (éventuellement par paliers), le gain de dérivée conventionnel diminuant lorsque la vitesse du véhicule augmente, et que cette même loi conventionnelle renvoie un coefficient multiplicateur inférieur à 1 (donc, dans l'absolu, un coefficient atténuateur), la seconde fonction d'adaptation L2 présente ici un tracé globalement concave, c'est-à-dire en dôme, de telle sorte que si l'on considère deux points de la courbe, le segment qui joint ces deux points se situe sous ladite courbe, ledit tracé culminant à la valeur de pic Kd_{pic}, ici strictement supérieure à 1 (donc amplificatrice), pic avant lequel la seconde fonction d'adaptation L2 est croissante, et après lequel ladite seconde fonction d'adaptation est décroissante.

Par ailleurs, selon une caractéristique préférentielle qui peut constituer une invention à part entière, on trouve, parmi les lois de compensation, au moins une loi anti-figeage L3, L4, L5, L6, L7 qui génère des composantes correctives Δ3, Δ4, Δ5, Δ6, Δ7 dites « composantes correctives de rappel » qui, lorsque le volant de conduite 16 est tourné de sorte à former un angle volant θᵥₒₗₐₙₜ non nul par rapport à une position centrale θ₀ correspondant à la trajectoire en ligne droite, sont aptes à forcer le rappel du volant de conduite 16 vers ladite position centrale θ₀, à l'encontre des composantes d'effort perturbatrices Fi qui tendent à réduire voire à faire disparaître le couple d'auto-alignement des roues 4, 6 (ou à tout le moins qui tendent à réduire ou à faire disparaître la perception tactile d'un tel couple d'auto-alignement au niveau du volant de conduite 16).

En première approximation, on pourra assimiler l'angle volant θᵥₒₗₐₙₜ, c'est-à-dire la position angulaire θᵥₒₗₐₙₜ du volant de conduite 16 considérée par rapport à la position centrale θ₀, comme égal à l'angle de braquage θ₄, θ₆ des roues 4, 6, et plus globalement comme égal à l'angle de braquage (moyen) du mécanisme de direction 10.

La loi anti-figeage L3, L4, L5, L6, L7 empêche avantageusement le différentiel à glissement limité 7 de faire disparaître, notamment lors de phases d'accélération en virage, la sensation de couple de rappel perceptible au volant 16, et *a fortiori* empêche le différentiel à glissement limité 7 de créer un avalement (un sur-braquage spontané).

Ladite loi anti-figeage fait intervenir à cet effet des composantes correctives de rappel Δ3, Δ4, Δ5, Δ6, Δ7 qui créent au volant 16 une sensation de couple de rappel (résultant) non nul, tant que ledit volant 16 dévie de sa position centrale θ₀.

Le rappel est « actif » en ceci que le moteur d'assistance 17 est sollicité activement et agit pour créer un effort (un couple) de rappel dans le volant 16, qui s'oppose au maintien manuel dudit volant 16 dans un angle de braquage (angle volant) θᵥₒₗₐₙₜ non nul et qui tend à rappeler activement ledit volant 16 vers sa position centrale θ₀.

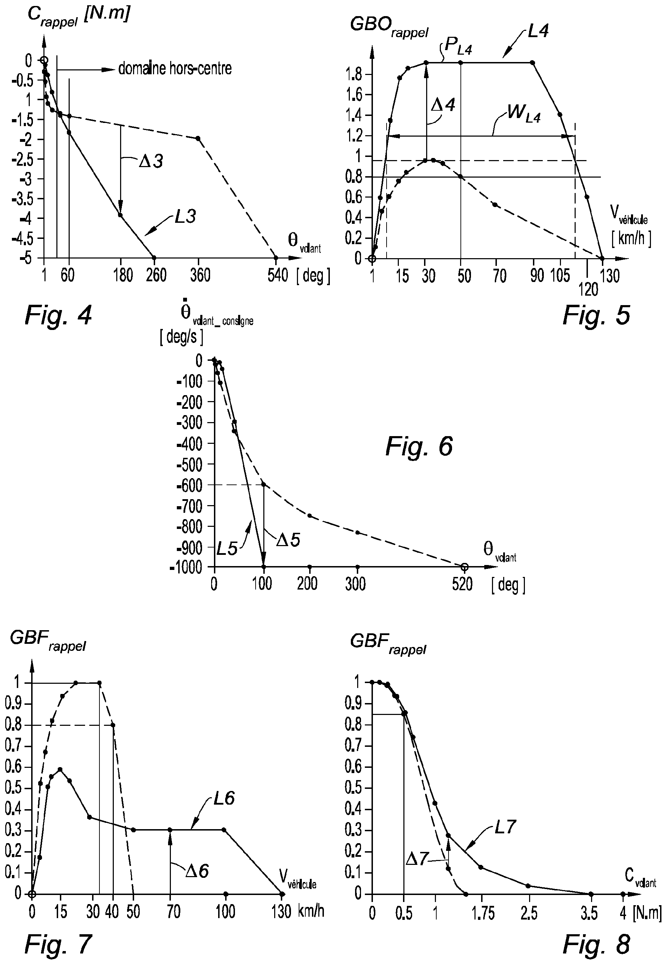

De préférence, tel que cela est illustré sur la figure 4, la loi anti-figeage comprend une fonction de rappel en boucle ouverte L3 qui élabore une consigne de rappel C_{Rappel} en multipliant un écart angulaire, défini comme la différence entre la position angulaire (absolue) instantanée du volant de conduite θᵥₒₗₐₙₜ et la position angulaire centrale θ₀ dudit volant de conduite 16, par un gain, dit « gain de rappel actif en boucle ouverte » GBO_{Rappel}.

La consigne de rappel C_{Rappel}, qui est intégrée à la consigne d'assistance C_{Mot} appliquée au moteur d'assistance 17, est représentative d'un couple de rappel (ou d'une composante de couple de rappel) qui contribue à définir, la consigne appliquée au moteur d'assistance 17, et donc l'action dudit moteur d'assistance.

La consigne de rappel C_{Rappel} est donc homogène à une consigne de couple d'assistance C_{Mot}, d'où son expression en N.m sur la figure 4.

En pratique, on pourra considérer, par convention, la position centrale du volant comme origine de la mesure de la position angulaire absolue du volant θᵥₒₗₐₙₜ, c'est-à-dire que l'on pourra poser : θ₀ = 0 deg, ce qui reviendra à assimiler l'« écart angulaire » susmentionné à la position angulaire du volant θᵥₒₗₐₙₜ.

Tel que cela est illustré sur la figure 4, la fonction de rappel en boucle ouverte L3 permet d'élaborer une consigne de rappel C_{Rappel} qui contient, par rapport à une loi conventionnelle de rappel en boucle ouverte (représentée en trait pointillé), une composante corrective de rappel Δ3, propre à neutraliser les effets de figeage induits par le différentiel 7, et qui renforce (ici dès que la position angulaire du volant θᵥₒₗₐₙₜ dépasse 30 degrés, voire 20 degrés) l'intensité de l'action de rappel exercée par le moteur d'assistance 17.

En tout état de cause, selon la fonction de rappel en boucle ouverte L3, l'intensité de la consigne de rappel C_{Rappel} augmente, en valeur absolue, avec l'écart angulaire, c'est-à-dire va croissant (en valeur absolue), lorsque l'angle volant θᵥₒₗₐₙₜ augmente.

Ainsi, plus le volant 16 s'écarte de sa position centrale, plus l'intensité de l'effort de rappel généré par le moteur d'assistance 17 est élevée.

On notera à ce titre que le signe négatif utilisé par convention sur l'axe des ordonnées de la figure 4 indique simplement que la consigne de rappel C_{Rappel}, qui entre dans la définition de la consigne d'assistance C_{Mot}, s'oppose à la manoeuvre manuelle du volant 16, et tend donc à faire en sorte que le moteur d'assistance 17 tire (rappelle) le volant dans le sens opposé au sens dans lequel le conducteur actionne manuellement et volontairement ledit volant 16.

On remarquera également que la fonction de rappel en boucle ouverte L3, et plus particulièrement la composante corrective de rappel Δ3 qu'elle contient, est telle que l'intensité de la consigne de rappel C_{Rappel} dépasse l'intensité du rappel conventionnel (indiqué par la courbe en trait pointillé) dès que la position angulaire du volant (angle volant) θᵥₒₗₐₙₜ dépasse 30 degrés, voire dès que la position angulaire du volant dépasse 20 degrés, c'est-à-dire dès que le volant 16, et plus globalement le véhicule 3, se trouve dans un domaine dit « hors centre », c'est-à-dire dans une situation de virage dans laquelle ledit véhicule ne progresse plus en ligne droite mais aborde ou suit une trajectoire courbe.

En d'autres termes, la compensation intégrée à la fonction de rappel en boucle ouverte L3 a pour effet d'augmenter, par rapport à une fonction de rappel conventionnelle, la consigne de rappel C_{Rappel} au-delà de 30 degrés, voire dès 20 degrés, et plus globalement dans tout le domaine « hors centre ».

Le phénomène de figeage étant en effet susceptible de se produire en virage, et d'autant plus susceptible de se produire que le virage est prononcé (et donc que la valeur de la position angulaire du volant θᵥₒₗₐₙₜ est élevée), il est avantageux de renforcer la consigne de rappel obtenue par la fonction de rappel (compensatrice) L3, par rapport à une loi de rappel conventionnelle, dès que le volant 16 est hors-centre.

En outre, lorsque le volant 16 se trouve « hors centre », le gain de rappel en boucle ouverte GBO_{Rappel}, spécifique à la fonction L3 intégrant la compensation, pourra avantageusement être supérieur au gain d'une fonction de rappel conventionnelle correspondante, ce qui se traduit graphiquement, sur la figure 4, par une pente plus forte de la fonction L3 par rapport à la pente de la fonction de rappel conventionnelle représentée en trait pointillé.

En l'espèce, le gain de rappel en boucle ouverte GBO_{Rappel}, spécifique à la fonction L3 pourra ici être supérieur au gain conventionnel au moins sur la plage de position angulaire du volant comprise entre 30 degrés (voire 20 degrés) et 360 degrés.

Tel que cela est notamment illustré sur la figure 4, la consigne de rappel C_{Rappel} ainsi compensée par la fonction L3 peut atteindre sensiblement le double de la valeur de la consigne de rappel conventionnelle lorsque la position angulaire du volant atteint et dépasse 120 degrés environ, et dépasser le triple de la valeur de la consigne de rappel conventionnelle lorsque la position angulaire du volant atteint et dépasse 210 degrés.

Typiquement, tel que cela est illustré sur la figure 4, une loi anti-figeage L3 pourra imposer une consigne de rappel C_{Rappel}, et donc un couple de rappel, qui sera égale ou supérieure, en valeur absolue, à 1,5 N.m dès que la position angulaire du volant atteint ou dépasse 40 degrés, comprise entre 1,8 N.m et 2 N.m lorsque la position angulaire du volant atteint 60 degrés, portée à environ 4 N.m lorsque la position angulaire du volant atteint 180 degrés, puis qui pourra atteindre 5 N.m lorsque la position angulaire du volant franchit 260 degrés et se maintient au-delà.

De préférence, tel que cela est illustré sur la figure 5, le gain de rappel en boucle ouverte GBO_{Rappel} est ajusté en fonction de la vitesse longitudinale du véhicule V_{véhicule}, par une fonction d'amplification L4 globalement concave dont la largeur à mi-hauteur W_{L4} couvre une plage de vitesses qui s'étend d'une valeur basse égale ou inférieure à 15 km/h, par exemple de l'ordre de 8 à 10 km/h sur la figure 5, jusqu'à une valeur haute égale ou supérieure à 100 km/h, par exemple de l'ordre de 110 km/h voire 115 km/h sur la figure 5.

En l'espèce, la valeur indiquée en ordonnées sur la figure 5 pourra correspondre à un coefficient multiplicateur qui pondère le gain de rappel en boucle ouverte GBO_{Rappel} (et en l'espèce amplifie ledit gain lorsque la valeur du coefficient est supérieure à 1).

Tel que cela est notamment illustré dans l'exemple de la figure 5, la fonction d'amplification L4 permet d'augmenter rapidement le gain de rappel en boucle ouverte avec la vitesse, et de maintenir une valeur élevée de gain (supérieure à la demi-hauteur du pic de la fonction L4) dès 15-20 km/h et jusqu'à au moins 90 km/h voire jusqu'à au moins 100 km/h.

Plus particulièrement, la fonction L4 pourra présenter un maximum (pic) sous forme d'un plateau P_{L4} sensiblement constant, qui s'étend sur une plage de vitesses particulièrement large, ici de 30 km/h environ à 90 km/h voire 100 km/h.

La fonction d'amplification L4 décroîtra ensuite de préférence pour s'annuler à partir d'une vitesse seuil, ici de l'ordre de 130 km/h.

On notera à ce titre que, en pratique, la vitesse seuil, ici de 130 km/h, correspond à la vitesse au-delà de laquelle on n'observe plus, ou quasiment plus, de figeage, si bien qu'il n'est plus nécessaire de prévoir un gain de rappel correspondant.

En pratique, cette vitesse seuil pourra correspondre à au moins 75 %, au moins 80 %, au moins 90 %, voire à 100 % de la vitesse maximale que peut atteindre le véhicule.

Bien entendu, dans le cas notamment de véhicules de sport destinés à pouvoir rouler, et emprunter des virages, à des vitesses très élevées, cette vitesse seuil pourra être relevée en conséquence, et par exemple être portée à 200 km/h voire à 250 km/h.

En pareil cas, la plage de vitesses couverte par la largeur à mi-hauteur W_{L4} de la fonction d'amplification L4 pourra être élargie en conséquence, la vitesse marquant la limite du plateau P_{L4} pouvant par exemple être augmentée jusqu'à au moins 180 km/h voire au moins 200 km/h.

Avantageusement, la fonction d'amplification L4 permet, par rapport à une fonction conventionnelle (représentée en trait pointillé sur la figure 5), d'étendre la plage de vitesses sur laquelle le gain de rappel en boucle ouverte est actif GBO_{Rappel}, ce qui permet de couvrir une plage de vitesses particulièrement étendue, et donc de conserver un rappel efficace du volant dans toutes les situations prévisibles dans lesquelles on cherche à transmettre un fort couple d'entraînement C5 aux roues 4, 6, notamment dans les situations correspondant à des phases d'accélération.

En pratique, on remarque ainsi que la largeur à mi-hauteur W_{L4} de la fonction d'amplification L4, fonction qui inclut une composante corrective Δ4 destinée à compenser des effets de figeage du différentiel à glissement limité 7, est nettement supérieure à la largeur à mi-hauteur de la fonction conventionnelle correspondante (de l'ordre du double de la largeur à mi-hauteur de ladite fonction conventionnelle), et couvre en particulier une plage de vitesses plus élevée, typiquement au-delà de 60 km/h et jusqu'à (au moins) 100 km/h ou jusqu'à (au moins) 115 km/h, voire jusqu'à la vitesse maximale que peut atteindre le véhicule.

On remarque aussi que, globalement, la fonction d'amplification L4 renvoie une valeur (coefficient multiplicateur) qui est strictement supérieure à celle de la fonction conventionnelle correspondante. Ceci est en particulier le cas sur la plage de vitesses correspondant à sa largeur à mi-hauteur W_{L4} ainsi que sur la plage de vitesses correspondant à son plateau P_{L4}, plages dans lesquelles la valeur retournée par la fonction d'amplification L4 est au moins 1,5 fois, voire 2 fois plus élevée que celle retournée par la fonction conventionnelle.

Qui plus est, ledit coefficient multiplicateur est ici supérieur à 1 sur un domaine de vitesses qui coïncide quasiment avec la largeur à mi-hauteur W_{L4}, depuis environ 10 km/h jusqu'à environ 110 km/h, si bien que le gain en boucle ouverte est amplifié sur tout ce domaine.

Avantageusement, le renforcement (et en l'espèce l'amplification) du gain de rappel en boucle ouverte GBO_{Rappel} permet d'intensifier le rappel du volant 16 à l'encontre du figeage.

On notera par ailleurs que la fonction de rappel en boucle ouverte L3 et la fonction d'amplification L4 peuvent notamment contribuer à compenser efficacement le figeage en situation de volant tenu, c'est-à-dire lorsque le conducteur tient en main le volant 16 et est en mesure d'exercer un effort manuel sur ledit volant 16, typiquement pour maintenir le cap du véhicule en virage.

Selon une possibilité préférentielle de mise en oeuvre, la loi anti-figeage comprend, tel que cela est illustré sur la figure 6, une fonction de rappel en boucle fermée L5, qui définit une consigne de vitesse angulaire de rappel du volant de conduite *θ̇_{Volant_consigne}* et qui adapte en temps réel la consigne d'assistance C_{Mot} appliquée au moteur d'assistance 17 de manière à ce que la vitesse angulaire réelle de rappel du volant *θ̇_{Volant}*, c'est-à-dire la vitesse de rotation à laquelle le volant 16 tourne pour rejoindre sa position angulaire centrale θ₀, suive ladite consigne de vitesse angulaire de rappel du volant *θ̇_{Volant_consigne}.*

En d'autres termes, la fonction L5 permet de réaliser un asservissement (en boucle fermée) du rappel du volant 16, en utilisant la vitesse de rotation (vitesse de rappel) du volant de conduite 16 comme variable asservie.

On notera qu'une telle fonction L5 est particulièrement adaptée à la gestion (à la compensation) du figeage (et *a fortiori* de l'avalement) en situation de volant lâché, c'est-à-dire lorsque le volant de conduite 16 n'est plus tenu en main par le conducteur (typiquement lorsque le conducteur, en sortie de virage, laisse intuitivement le volant 16 revenir « naturellement » vers sa position centrale θ₀ par phénomène d'auto-alignement).

On notera également que la fonction de rappel en boucle fermée L5 (utilisant comme variable asservie la vitesse angulaire de rappel du volant) et la fonction de rappel en boucle ouverte L3 (utilisant la position angulaire du volant) peuvent coexister et être éventuellement appliquées simultanément, notamment en situation de volant tenu, pour améliorer la compensation du figeage en accentuant l'effet de rappel du volant 16.

De préférence, tel que cela est illustré sur la figure 6, la consigne de vitesse de rappel de volant *θ̇_{Volant_consigne}* croît, en valeur absolue, avec l'écart angulaire qui est défini comme la différence entre la position angulaire instantanée du volant de conduite θᵥₒₗₐₙₜ et la position angulaire centrale θ₀ dudit volant de conduite 16 (c'est-à-dire en pratique en fonction de la position angulaire θᵥₒₗₐₙₜ absolue du volant).

Tel que cela est visible sur la figure 6, la fonction de rappel en boucle fermée L5 permet donc d'augmenter la consigne de vitesse de rappel de volant *θ̇_{Volant_consigne}* (en valeur absolue) au fur et à mesure que le volant 16 s'écarte de sa position centrale θ₀.

On notera que le signe négatif utilisé ici par convention indique simplement que le rappel s'effectue dans le sens de rotation qui est opposé au sens de braquage du volant à l'instant considéré (la consigne de rappel visant à faire revenir ledit volant 16 dans sa position centrale, alors que le braquage manuel tend à éloigner le volant de ladite position centrale).

On notera également que, par rapport à une loi conventionnelle (représentée en pointillé), la fonction de rappel en boucle fermée L5 accentue, par sa composante corrective Δ5, le taux de croissance de la consigne de vitesse de rappel de volant en fonction de la position angulaire dudit volant, c'est-à-dire augmente la pente de la fonction, au moins dans l'intervalle de position angulaire du volant compris entre la position centrale (zéro degré) et 100 degrés, et de préférence sur la majorité voire sur l'ensemble de la (demi-)course angulaire totale du volant 16, comprise entre la position centrale du volant 16 (θ₀ = 0 degré) et la position extrême du volant 16 (c'est-à-dire la valeur maximale que peut prendre l'angle volant, ici 520 degrés sur la figure 6).

Typiquement, la pente moyenne propre à la fonction L5 incluant la compensation pourra être supérieure ou égale à 1,2 fois, à 1,5 fois, voire à 2 ou 3 fois la pente moyenne de la fonction conventionnelle non compensée correspondante (en pointillé), sur ledit intervalle de position angulaire (ici [0 deg ; 100 deg], voire [0 deg ; angle volant maximal]).

De préférence, la fonction de rappel en boucle fermée L5 fait intervenir un gain, dit « gain de rappel en boucle fermée » GBF_{Rappel}, qui est ajusté d'une part en fonction de la vitesse longitudinale du véhicule V_{véhicule}, selon une première fonction d'ajustement de gain de rappel en boucle fermée, notée L6, et d'autre part en fonction décroissante du couple volant Cᵥₒₗₐₙₜ exercé sur le volant de conduite 16, selon une seconde fonction d'ajustement de gain de rappel en boucle fermée, notée L7.

Un exemple de première fonction L6 d'ajustement du gain de rappel en boucle fermée GBF_{Rappel}, qui modifie (par coefficient multiplicateur) ledit gain en fonction de la vitesse du véhicule, est illustré sur la figure 7.

Ladite première fonction d'ajustement L6 présente tout d'abord, entre 0 et 50 km/h environ, un premier domaine concave, avec un pic (maximum) aux environs de 15 km/h à 20 km/h, puis ensuite, entre 50 km/h et 130 km/h environ, un second domaine dans lequel le gain est maintenu à un niveau non nul, bien qu'inférieur au pic susmentionné, d'abord sous forme d'un plateau sensiblement constant (jusqu'à 100 km/h environ), puis sous forme d'une fonction décroissante (ici entre 100 km/h et 130 km/h). Au-delà, le gain s'annule.

On notera que, de même que pour la fonction d'amplification L4 associée au rappel en boucle ouverte, la première fonction d'ajustement L6 s'annule, c'est-à-dire éteint le gain de rappel en boucle fermée GBF_{Rappel}, lorsque la vitesse du véhicule atteint et dépasse un seuil de vitesse à partir duquel on n'observe, en pratique, plus de figeage, ledit seuil de vitesse étant en l'espèce fixé comme cela a été indiqué plus haut en référence à la fonction d'amplification L4, et par exemple choisi ici égal à 130 km/h.

On remarquera également que la composante corrective Δ6 induite par la première fonction d'ajustement L6 a pour effet, par rapport à la fonction d'ajustement conventionnelle correspondante (en pointillé), de réduire le gain de rappel en boucle fermée GBF_{Rappel} dans le premier domaine susmentionné (en deçà de 40 km/h, voire jusqu'à 50 km/h), et au contraire d'accentuer ledit gain, en le maintenant à un niveau non nul, dans le second domaine (au-delà de 50 km/h, et en l'espèce jusqu'au seuil de vitesse de 130 km/h).

Ici encore, ces adaptations permettent d'assurer un rappel effectif du volant 16 sur l'ensemble de la plage de vitesses qui couvre en pratique toutes les situations prévisibles d'accélération et d'administration d'un fort couple d'entraînement C5 au train roulant 2.

Un exemple de seconde fonction L7 d'ajustement du gain de rappel en boucle fermée GBF_{Rappel}, qui modifie (par coefficient multiplicateur) ledit gain en fonction du couple volant Cᵥₒₗₐₙₜ, est illustré sur la figure 8.

Cette seconde fonction (décroissante) d'ajustement L7 permet de maintenir un gain de rappel en boucle fermée GBF_{Rappel} élevé pour les faibles valeurs de couple volant Cᵥₒₗₐₙₜ, typiquement inférieures à 1,5 N.m, à 1 N.m, voire à 0,5 N.m, qui sont caractéristiques d'une trajectoire au voisinage de la ligne droite et/ou d'une situation de volant lâché, puis de réduire significativement ledit gain (par un coefficient multiplicateur ici inférieur à 0,1) lorsque le couple volant se situe au-delà de 1,75 N.m. Ladite fonction va même jusqu'à annuler ledit gain à partir d'un couple volant de 3 N.m ou 3,5 N.m et au-delà.

On peut ainsi accentuer le rappel du volant, et donc faire converger le volant 16 plus rapidement vers sa position centrale θ₀, lorsque ledit volant est lâché par le conducteur (qui, intuitivement, souhaite ainsi laisser le volant se recentrer), ou bien lorsque le conducteur, au voisinage de la ligne droite, ne tient pas fermement le volant 16 et n'opère que de légères corrections de trajectoire.

A l'inverse, le rappel sera moins marqué lorsque le volant 16 est soumis à un couple important, ce qui indique que ledit volant est fermement tenu en mains par le conducteur.

Par rapport à une fonction d'ajustement conventionnelle (représentée en trait pointillé sur la figure 8), la composante corrective Δ7 induite par la seconde fonction d'ajustement L7 a un effet sensiblement homothétique d'agrandissement (par rapport à l'origine du graphique de la figure 8) qui permet d'accentuer légèrement l'intensité du gain de rappel en boucle fermée GBF_{Rappel}, et ce sur une plage de couple volant Cᵥₒₗₐₙₜ plus étendue.

En pratique, le module de gestion 20 selon l'invention comprendra au moins une loi de compensation, et de préférence plusieurs lois de compensation parmi celles L1, L2, L3, L4, L5, L6, L7 décrites dans ce qui précède, et notamment au moins une loi d'atténuation des remontées d'efforts alternés L1, L2 et/ou au moins une loi anti-figeage L3, L4, L5, L6, L7.

Bien entendu, l'invention concerne également en tant que tel un support de données lisible par un calculateur et comprenant des éléments de code de programme informatique permettant l'exécution de l'une et/ou l'autre des lois de compensation L1, L2, L3, L4, L5, L6, L7 susmentionnées.

L'invention porte en outre également sur un véhicule 3 automobile à traction avant comprenant un train roulant 2 avant à la fois moteur et directeur, qui présente une première roue 4 à la fois directrice et motrice et une seconde roue 6 à la fois directrice et motrice, ledit véhicule 3 étant caractérisé en ce que la première roue 4 et la seconde roue 6 sont couplées l'une à l'autre par un différentiel à glissement limité 7 agencé pour transmettre un couple d'entraînement C5, C4, C6 auxdites première roue et seconde roue afin de propulser le véhicule, ledit différentiel à glissement limité 7 étant conçu pour activer automatiquement, en cas de perte de synchronisme et/ou de perte d'adhérence de l'une des première 4 et seconde 6 roues, un mode de fonctionnement dit « mode de blocage » dans lequel ledit différentiel à glissement limité 7 transfère la majorité du couple d'entraînement C5 vers la plus lente des première et seconde roues 4, 6, et en ce que ledit véhicule 3 comprend, pour manoeuvrer ledit train roulant 2 avant, un dispositif de direction assistée 1 selon l'une quelconque des variantes décrites ci-dessus, de manière à procurer au conducteur un ressenti proche de celui d'un train roulant avant dépourvu de mode de blocage.

De même, l'invention concerne en tant que telle l'utilisation d'un moteur d'assistance 17 d'une direction assistée 1 équipant un train roulant 2 de véhicule, de préférence un train roulant 2 avant, qui est un train roulant à la fois moteur et directeur pourvu d'un différentiel à glissement limité 7, pour contrer sensiblement en temps réel les effets induits dans ladite direction assistée par l'activation du blocage du différentiel à glissement limité 7 (c'est-à-dire typiquement pour contrer les efforts Fi provoquant des remontées d'efforts alternés ou un figeage de direction), de manière à modifier le ressenti procuré au conducteur en reproduisant un ressenti virtuel qui est sensiblement similaire au ressenti que procurerait ce même train roulant s'il était dépourvu de différentiel à glissement limité (c'est-à-dire dépourvu de fonction de blocage automatique permettant de faire basculer la majorité du couple d'entraînement C5 vers la roue motrice 4, 6 la plus lente).

En pratique, la mise en application de l'invention peut se traduire sous forme d'un procédé de paramétrage (de réglage) d'un dispositif de direction assistée 1, procédé qui peut être mis en oeuvre par modélisation/simulation, et/ou empiriquement lors de campagnes d'essais menées sur le véhicule 3.

Au cours de ce procédé, on pourra tout d'abord définir, au cours d'une étape de définition de référence, par des mesures ou des simulations idoines, un premier schéma de comportement, dit schéma de comportement conventionnel, qui caractérise les réactions du dispositif de direction assistée 1, et notamment les efforts renvoyés à travers le mécanisme de direction 10 jusqu'au volant de conduite 16, dans différentes situations de vie, et en particulier dans différentes situations d'accélération, notamment en virage, d'un véhicule 3 dont le train 2 avant moteur est équipé d'un différentiel conventionnel, dépourvu de fonction de blocage automatique.

Les réactions du dispositif de direction assistée pourront avantageusement être caractérisées par un paramètre (ou un jeu de paramètres) sélectionné(s), dit « paramètre de ressenti », qui traduit la perception du véhicule par le conducteur.

Ledit paramètre de ressenti pourra être typiquement le couple volant Cᵥₒₗₐₙₜ perceptible au volant 16 (volant tenu) et/ou la vitesse de rappel *θ̇_{Volant}* dudit volant (volant lâché).

On pourra ensuite, au cours d'une étape de caractérisation, mesurer ou simuler, dans les même situations de vie que celles utilisées pour définir le schéma de comportement conventionnel, les réactions (et donc les valeurs du paramètre de ressenti) du même dispositif de direction assistée 1, équipant le même type de véhicule 3 mais pourvu cette fois d'un différentiel à glissement limité 7 en lieu et place du différentiel conventionnel, et ainsi établir un second schéma de comportement dit schéma de comportement perturbé. Ce second schéma de comportement reflète intrinsèquement, entre autres, les effets négatifs induits par la présence du différentiel à glissement limité 7.

On pourra ensuite, au cours d'une troisième étape de traitement, comparer le second schéma de comportement perturbé au premier schéma de comportement conventionnel, et en particulier les valeurs du paramètre de ressenti prises respectivement dans le premier schéma et dans le second schéma, et déduire des écarts constatés lors de cette comparaison des lois de compensation L1, L2, L3, L4, L5, L6, L7 qui, appliquées au véhicule 3 équipé d'un différentiel à glissement limité 7, permettront à ce dernier de reproduire le premier schéma de comportement conventionnel.

De préférence, une fois choisi un paramètre de ressenti qui caractérise la perception du véhicule par le conducteur, les lois de compensation L1, L2, L3, L4, L5, L6, L7 permettront au véhicule 3 équipé d'un différentiel à glissement limité 7, au moins dans les situations de vie identifiées comme pertinentes (typiquement les situations propices aux remontées d'efforts alternés ou au figeage), de reproduire le schéma de comportement conventionnel, c'est-à-dire de restituer un paramètre de ressenti dont la valeur, tous paramètres étant constants par ailleurs, se rapproche de la valeur qui est prise, dans la même situation de vie, par le même paramètre de ressenti dans le schéma conventionnel, et ce de préférence avec une tolérance inférieure ou égale à +/- 20 %, à +/- 10 %, voire à +/- 5 % par rapport à la valeur cible que constitue la valeur du paramètre de ressenti obtenue dans le schéma conventionnel.

En d'autres termes, les lois de compensation L1, L2, L3, L4, L5, L6, L7 permettront de restituer, au sein du véhicule 3 équipé d'un différentiel à glissement limité 7, un paramètre de ressenti (couple volant ou vitesse de rotation du volant) dont la valeur ne s'écartera pas de plus de 20 %, de 10 % voire de 5 %, de la valeur prise par ce même paramètre de ressenti dans la même situation de vie mais au sein d'un véhicule équipé d'un différentiel conventionnel.

Avantageusement, l'invention, permet donc d'envisager une généralisation de l'usage d'un différentiel à glissement limité, même fortement taré, au sein des véhicules à traction avant, y compris au sein de véhicules de forte puissance disposant de capacités élevées d'accélération.

Le cas échéant, les lois de compensation peuvent par ailleurs avantageusement être introduites en rattrapage pour adapter des dispositifs de direction assistée déjà existant et permettre ainsi une prise en charge efficace des effets négatifs d'un différentiel à glissement limité.

## Revendications

1. Dispositif de direction assistée (1) destiné à la manoeuvre d'un train roulant (2) de véhicule (3) qui comprend une première roue (4) à la fois directrice et motrice et une seconde roue (6) à la fois directrice et motrice qui sont couplées l'une à l'autre par un différentiel à glissement limité (7) agencé pour transmettre un couple d'entraînement (C5) auxdites première roue et seconde roue afin de propulser le véhicule, ledit différentiel à glissement limité (7) étant conçu pour activer automatiquement, en cas de perte de synchronisme et/ou d'adhérence de l'une des première et seconde roues (4, 6), un mode de fonctionnement dit « mode de blocage » dans lequel ledit différentiel à glissement limité transfère la majorité du couple d'entraînement (C5) vers la plus lente des première et seconde roues (4, 6), ledit dispositif de direction assistée comprenant par ailleurs au moins un mécanisme de direction (10) qui est agencé pour manoeuvrer les première et seconde roues (4, 6) afin de modifier leur angle de braquage (θ₄, θ₆), un volant de conduite (16) qui permet à un conducteur de piloter ledit mécanisme de direction (10), ainsi qu'un moteur d'assistance (17) qui vient en prise sur le mécanisme de direction et qui est commandé par au moins un module de gestion (20) agencé pour élaborer une consigne d'assistance (C_{MOT}) et appliquer ladite consigne d'assistance audit moteur d'assistance (17), ledit dispositif de direction assistée (1) étant **caractérisé en ce que** le module de gestion de direction (20) contient des lois de compensation (L1, L2, L3, L4, L5, L6, L7) qui interviennent dans l'élaboration de la consigne d'assistance de manière à intégrer dans ladite consigne d'assistance (C_{MOT}) des composantes correctives (Δ1, Δ2, Δ3, Δ4, Δ5, Δ6, Δ7) permettant au moteur d'assistance (17) de compenser certaines composantes d'effort (Fi), dites « composantes d'effort perturbatrices », qui sont induites dans le mécanisme de direction par l'activation du mode de blocage du différentiel à glissement limité, et ce de manière à procurer au conducteur un ressenti proche de celui d'un train roulant (2) dépourvu de mode de blocage,
ledit dispositif étant **caractérisé en ce que**, parmi les lois de compensation, on trouve :
(i) au moins une loi d'atténuation des remontées d'efforts alternés (L1, L2), qui génère des composantes correctives dites « anti-remontées » qui s'opposent aux composantes d'effort perturbatrices (Fi) provoquées par des alternances de transferts majoritaires de couple d'entraînement (C5) entre la première roue (4) et la seconde roue (6), et **en ce que** la loi (L1, L2) d'atténuation des remontées d'efforts alternés fait intervenir une composante corrective anti-remontées dite « composante de dérivée » (Δ1, Δ2) qui est élaborée en multipliant la valeur de la dérivée temporelle (dCᵥₒₗₐₙₜ/dt) du couple volant (Cᵥₒₗₐₙₜ) exercé sur le mécanisme de direction (10) au niveau du volant de conduite (16), par un gain, dit « gain de dérivée » (Kd),
et/ou
(ii) au moins une loi anti-figeage (L3, L4, L5, L6, L7) qui génère des composantes correctives dites « composantes correctives de rappel » (Δ3, Δ4, Δ5, Δ6, Δ7) qui, lorsque le volant de conduite (16) est tourné de sorte à former un angle volant (θᵥₒₗₐₙₜ) non nul par rapport à une position centrale (θ₀) correspondant à la trajectoire en ligne droite, sont aptes à forcer le rappel du volant de conduite (16) vers ladite position centrale (θ₀), à l'encontre des composantes d'effort perturbatrices (Fi) qui tendent à réduire voire à faire disparaître le couple d'auto-alignement des roues (4, 6),
et **en ce que** ladite loi anti-figeage comprend :
- une fonction de rappel en boucle ouverte (L3) qui élabore une consigne de rappel (C_{Rappel}) en multipliant un écart angulaire, défini comme la différence entre la position angulaire instantanée du volant de conduite (θᵥₒₗₐₙₜ) et la position angulaire centrale (θ₀) dudit volant de conduite (16), par un gain, dit « gain de rappel en boucle ouverte » (GBO_{Rappel}), et/ou
- une fonction de rappel en boucle fermée (L5) qui définit une consigne de vitesse angulaire de rappel du volant de conduite (*θ̇_{Volant_consigne}*) et qui adapte en temps réel la consigne d'assistance (C_{Mot}) appliquée au moteur d'assistance (17) de manière à ce que la vitesse angulaire réelle de rappel du volant (*θ̇_{Volant}*) suive ladite consigne de vitesse angulaire de rappel du volant (*θ̇_{Volant_consigne}*), et **en ce que** la consigne de vitesse de rappel de volant (*θ̇_{Volant_consigne}*) croît, en valeur absolue, avec l'écart angulaire qui est défini comme la différence entre la position angulaire instantanée du volant de conduite (θᵥₒₗₐₙₜ) et la position angulaire centrale (θ₀) dudit volant de conduite .

2. Dispositif selon la revendication 1 **caractérisé en ce que** la loi d'atténuation des remontées d'efforts alternés (L1, L2) comprend une première fonction d'adaptation (L1), selon laquelle le gain de dérivée (Kd) augmente lorsque le couple volant (Cᵥₒₗₐₙₜ), exercé sur le volant de conduite (16), ou bien, de manière équivalente, lorsque le gradient d'assistance (dC_{Mot}/dCᵥₒₗₐₙₜ) qui représente à l'instant considéré la variation (dC_{Mot}) du couple d'assistance délivré par le moteur d'assistance (17) rapportée à la variation correspondante du couple volant (dCᵥₒₗₐₙₜ), ou bien encore, si le dispositif de direction (1) comprend une crémaillère de direction (11) sur laquelle s'exerce un effort longitudinal de traction dit « effort de crémaillère », lorsque ledit effort de crémaillère, descend sous un seuil prédéterminé, dit « seuil de ligne droite », qui indique que le véhicule (3) suit une trajectoire proche de la ligne droite.

3. Dispositif selon la revendication 1 ou 2 **caractérisé en ce que** la loi d'atténuation des remontées d'efforts alternés (L1, L2) comprend une seconde fonction d'adaptation (L2), selon laquelle le gain de dérivée (Kd) est adapté en fonction de la vitesse longitudinale du véhicule (V_{véhicule}), ladite seconde fonction d'adaptation (L2) présentant un maximum (Kd_{pic}) qui est situé à une abscisse de vitesse (V_{véhicule}) comprise entre 35 km/h et 90 km/h, de préférence entre 35 km/h et 50 km/h, et par exemple sensiblement égale à 40 km/h.

4. Dispositif selon la revendication 3 **caractérisé en ce que** la seconde fonction d'adaptation (L2) est globalement concave, et présente à cet effet au moins un domaine croissant, entre la valeur à l'origine (Kd₀) qui correspond à la valeur du gain de dérivée à vitesse nulle, et le maximum (Kd_{pic}), puis un domaine décroissant au-delà dudit maximum (Kd_{pic}).

5. Dispositif selon l'une des revendications précédentes **caractérisé en ce que** le gain de rappel en boucle ouverte (GBO_{Rappel}) de la loi anti-figeage est ajusté en fonction de la vitesse longitudinale du véhicule (V_{véhicule}), par une fonction d'amplification (L4) globalement concave dont la largeur à mi-hauteur (W_{L4}) couvre une plage de vitesses qui s'étend d'une valeur basse égale ou inférieure à 15 km/h jusqu'à une valeur haute égale ou supérieure à 100 km/h.

6. Dispositif selon l'une des revendications précédentes **caractérisé en ce que** la fonction (L5) de rappel en boucle fermée de la loi anti-figeage fait intervenir un gain, dit « gain de rappel en boucle fermée » (GBF_{Rappel}), qui est ajusté d'une part en fonction (L6) de la vitesse longitudinale du véhicule (V_{véhicule}), et d'autre part en fonction (L7) décroissante du couple volant (Cᵥₒₗₐₙₜ) exercé sur le volant de conduite (16).

7. Véhicule (3) automobile à traction avant ou à transmission intégrale, comprenant un train roulant (2) avant à la fois moteur et directeur, qui présente une première roue (4) à la fois directrice et motrice et une seconde roue (6) à la fois directrice et motrice, ledit véhicule (3) étant **caractérisé en ce que** la première roue (4) et la seconde roue (6) sont couplées l'une à l'autre par un différentiel à glissement limité (7) agencé pour transmettre un couple d'entraînement (C5) auxdites première roue et seconde roue afin de propulser le véhicule, ledit différentiel à glissement limité (7) étant conçu pour activer automatiquement, en cas de perte de synchronisme et/ou d'adhérence de l'une des première et seconde roues (4, 6), un mode de fonctionnement dit « mode de blocage » dans lequel ledit différentiel à glissement limité transfère la majorité du couple d'entraînement (C5) vers la plus lente des première et seconde roues (4, 6), et **en ce que** ledit véhicule (3) comprend, pour manoeuvrer ledit train roulant avant, un dispositif de direction assistée (1) selon l'une des revendications 1 à 6 de manière à procurer au conducteur un ressenti proche de celui d'un train roulant avant dépourvu de mode de blocage.

## Patentansprüche

1. Servolenkungsvorrichtung (1), die zum Manövrieren eines Achsaggregats (2) eines Fahrzeugs (3) bestimmt ist, das ein erstes Rad (4), das sowohl lenkbar, als auch angetrieben ist, und ein zweites Rad (6), das sowohl lenkbar, als auch angetrieben ist, umfasst, die miteinander durch ein Sperrdifferenzial (7) gekoppelt sind, das angeordnet ist, um ein Antriebsmoment (C5) auf das erste Rad und zweite Rad zu übertragen, um das Fahrzeug voranzutreiben, wobei das Sperrdifferenzial (7) gestaltet ist, um im Falle des Synchronisations- und/oder Haftverlustes des einen von dem ersten und zweiten Rad (4, 6) automatisch einen "Sperrmodus" genannten Betriebsmodus zu aktivieren, bei dem das Sperrdifferenzial den Großteil des Antriebsmoments (C5) auf das Langsamere des ersten und zweiten Rades (4, 6) verlagert, wobei die Servolenkungsvorrichtung darüber hinaus mindestens einen Lenkmechanismus (10), der angeordnet ist, um das erste und zweite Rad (4, 6) zu manövrieren, um deren Lenkeinschlagwinkel (θ₄, θ₆) zu ändern, ein Fahrlenkrad (16), das es einem Lenker ermöglicht, den Lenkmechanismus (10) anzusteuern, sowie einen Unterstützungsmotor (17), der in den Lenkmechanismus eingreift, und der durch mindestens ein Verwaltungsmodul (20) gesteuert wird, das angeordnet ist, um eine Unterstützungsvorgabe (C_{MOT}) auszuarbeiten und die Unterstützungsvorgabe auf den Unterstützungsmotor (17) anzuwenden, umfasst, wobei die Servolenkungsvorrichtung (1) **dadurch gekennzeichnet ist, dass** das Lenkungsverwaltungsmodul (20) Kompensationsgesetze (L1, L2, L3, L4, L5, L6, L7) enthält, die bei der Ausarbeitung der Unterstützungsvorgabe derart intervenieren, dass sie in die Unterstützungsvorgabe (C_{MOT}) Korrekturkomponenten (Δ1, Δ2, Δ3, Δ4, Δ5, Δ6, Δ7) integrieren, die es dem Unterstützungsmotor (17) erlauben, bestimmte "Störbelastungskomponenten" genannte Belastungskomponenten (Fi) zu kompensieren, die durch die Aktivierung des Sperrmodus des Sperrdifferenzials in den Lenkmechanismus induziert werden, und dies um, dem Lenker ein Empfinden zu vermitteln, das nahe jenem eines Achsaggregats (2) ist, das mit keinem Sperrmodus versehen ist,
wobei die Vorrichtung **dadurch gekennzeichnet ist, dass** man unter den Kompensationsgesetzen Folgendes findet:
(i) mindestens ein Gesetz zur Abschwächung der Anstiege von Wechselbelastungen (L1, L2), das "Anstiegsschutz" genannte Korrekturkomponenten generiert, die sich den Störbelastungskomponenten (Fi) entgegenstellen, die durch maßgebliche Verlagerungswechsel eines Antriebsmoments (C5) zwischen dem ersten Rad (4) und dem zweiten Rad (6) hervorgerufen werden, und dadurch, dass das Gesetz (L1, L2) zur Abschwächung der Anstiege von Wechselbelastungen eine "Ableitkomponente" (Δ1, Δ2) genannte Anstiegsschutz-Korrekturkomponente intervenieren lässt, die ausgearbeitet wird, indem man den Wert der zeitlichen Ableitung (dCᵥₒₗₐₙₜ/dt) des Lenkradmoments (Cᵥₒₗₐₙₜ), das auf den Lenkmechanismus (10) im Bereich des Fahrlenkrades (16) ausgeübt wird, mit einer "Ableitungsverstärkung" (Kd) genannten Verstärkung multipliziert,
und/oder
(ii) mindestens ein Erstarrungsschutzgesetz (L3, L4, L5, L6, L7), das "korrigierende Rückstellkomponenten" (Δ3, Δ4, Δ5, Δ6, Δ7) genannte Korrekturkomponenten generiert, die, wenn das Fahrlenkrad (16) derart gedreht wird, dass ein Lenkradwinkel (θᵥₒₗₐₙₜ) ungleich null in Bezug zu einer zentralen Position (θ₀) gebildet wird, die einer geradeaus verlaufenden Trajektorie entspricht, imstande sind, die Rückstellung des Fahrlenkrades (16) in die zentrale Position (θ₀) entgegen den Störbelastungskomponenten (Fi) zu forcieren, die dazu tendieren, das Selbstausrichtungsmoment der Räder (4, 6) zu reduzieren oder gar verschwinden zu lassen,
und dadurch, dass das Erstarrungsschutzgesetz umfasst:
- eine Rückstellfunktion im offenen Regelkreis (L3), die eine Rückstellvorgabe (C_{Rappel}) ausarbeitet, indem sie eine Winkelabweichung, die als die Differenz zwischen der momentanen Winkelposition des Fahrlenkrades (θᵥₒₗₐₙₜ) und der zentralen Winkelposition (θ₀) des Fahrlenkrades (16) definiert wird, mit einer "Rückstellverstärkung im offenen Regelkreis" (GBO_{Rappel}) genannten Verstärkung multipliziert, und/oder
- eine Rückstellfunktion im geschlossenen Regelkreis (L5), die eine Winkelgeschwindigkeitsvorgabe für die Rückstellung des Fahrlenkrades (θ̇_{volant_consigne}) definiert, und in Echtzeit die Unterstützungsvorgabe (C_{Mot}), die auf den Unterstützungsmotor (17) angewendet wird, derart anpasst, dass die Ist-Winkelgeschwindigkeit für die Rückstellung des Fahrlenkrades (θ̇_{Volant}) der Winkelgeschwindigkeitsvorgabe für die Rückstellung des Fahrlenkrades (θ̇_{Volant_consigne}) folgt, und dadurch, dass die Geschwindigkeitsvorgabe für die Rückstellung des Fahrlenkrades (θ̇_{Volant_consigne}) als absoluter Wert mit der Winkelabweichung wächst, die als die Differenz zwischen der momentanen Winkelposition des Fahrlenkrades (θ̇ᵥₒₗₐₙₜ) und der zentralen Winkelposition (θ₀) des Fahrlenkrades definiert wird.

2. Vorrichtung nach Anspruch 1, **dadurch gekennzeichnet, dass** das Abschwächungsgesetz der Anstiege von Wechselbelastungen (L1, L2) eine erste Anpassungsfunktion (L1) umfasst, bei der sich die Ableitungsverstärkung (Kd) erhöht, wenn das Lenkradmoment (Cᵥₒₗₐₙₜ), das auf das Fahrlenkrad (16) ausgeübt wird, oder aber, in äquivalenter Form, wenn der Unterstützungsgradient (dC_{Mot}/dCᵥₒₗₐₙₜ), der zum angenommenen Zeitpunkt die Variation (dC_{Mot}) des Unterstützungsmoments, das von dem Unterstützungsmotor (17) abgegeben wird, die zu der entsprechenden Variation des Lenkradmoments (dCᵥₒₗₐₙₜ) beigebracht wird, repräsentiert, oder aber, wenn die Lenkungsvorrichtung (1) eine Lenkzahnstange (11) umfasst, auf die eine "Zahnstangenbelastung" genannte Längszugbelastung ausgeübt wird, wenn die Zahnstangenbelastung unter einen zuvor bestimmten "Geradeaus-Schwellenwert" genannten Schwellenwert sinkt, der angibt, dass das Fahrzeug (3) einer Trajektorie nahe jener für Geradeaus folgt.

3. Vorrichtung nach Anspruch 1 oder 2, **dadurch gekennzeichnet, dass** das Abschwächungsgesetz der Anstiege von Wechselbelastungen (L1, L2) eine zweite Anpassungsfunktion (L2) umfasst, bei der die Ableitungsverstärkung (Kd) in Abhängigkeit von der Längsgeschwindigkeit des Fahrzeugs (V_{véhicule}) angepasst wird, wobei die zweite Anpassungsfunktion (L2) ein Maximum (Kd_{pic}) aufweist, das sich auf einer Geschwindigkeitsabszisse (V_{véhicule}) befindet, die zwischen 35 km/h und 90 km/h, vorzugsweise zwischen 35 km/h und 50 km/h enthalten ist, und beispielsweise im Wesentlichen gleich 40 km/h ist.

4. Vorrichtung nach Anspruch 3, **dadurch gekennzeichnet, dass** die zweite Anpassungsfunktion (L2) global konkav ist, und zu diesem Zweck mindestens eine ansteigende Domäne zwischen dem Wert zu Beginn (Kd₀), der dem Wert der Ableitverstärkung bei Geschwindigkeit null entspricht, und dem Maximum (Kd_{pic}) aufweist, und danach eine abfallende Domäne jenseits des Maximums (Kd_{pic}).

5. Vorrichtung nach einem der vorstehenden Ansprüche, **dadurch gekennzeichnet, dass** die Rückstellverstärkung im offenen Regelkreis (GBO_{Rappel}) des Erstarrungsschutzgesetzes in Abhängigkeit von der Längsgeschwindigkeit des Fahrzeugs (V_{véhicule}) durch eine global konkave Amplifizierungsfunktion (L4) angepasst wird, deren Breite auf halber Höhe (W_{L4}) einen Bereich an Geschwindigkeiten abdeckt, der sich über einen niedrigen Wert kleiner als oder gleich 15 km/h bis zu einem hohen Wert größer als oder gleich 100 km/h erstreckt.

6. Vorrichtung nach einem der vorstehenden Ansprüche, **dadurch gekennzeichnet, dass** die Rückstellfunktion (L5) in geschlossenem Regelkreis des Erstarrungsschutzgesetzes eine "Rückstellverstärkung im geschlossenen Regelkreis" (GBF_{Rappel}) genannte Verstärkung intervenieren lässt, die einerseits in Abhängigkeit (L6) von der Längsgeschwindigkeit des Fahrzeugs (V_{véhicule}), und andererseits in einer abnehmenden Funktion (L7) des Lenkradmoments (Cᵥₒₗₐₙₜ), das auf das Fahrlenkrad (16) ausgeübt wird, angepasst wird.

7. Kraftfahrzeug (3) mit Vorderradantrieb oder Allradantrieb, ein vorderes Achsaggregat (2), sowohl angetrieben, als auch lenkbar, umfassend, das ein erstes Rad (4), das sowohl lenkbar, als auch angetrieben ist, und ein zweites Rad (6), das sowohl lenkbar, als auch angetrieben ist, aufweist, wobei das Fahrzeug (3) **dadurch gekennzeichnet ist, dass** das erste Rad (4) und das zweite Rad (6) miteinander durch ein Sperrdifferenzial (7) gekoppelt sind, das angeordnet ist, um ein Antriebsmoment (C5) auf das erste Rad und zweite Rad zu übertragen, um das Fahrzeug voranzutreiben, wobei das Sperrdifferenzial (7) gestaltet ist, um im Falle des Synchronisations- und/ oder Haftverlustes des einen von dem ersten und zweiten Rad (4, 6) automatisch einen "Sperrmodus" genannten Betriebsmodus zu aktivieren, bei dem das Sperrdifferenzial den Großteil des Antriebsmoments (C5) auf das Langsamere des ersten und zweiten Rades (4, 6) verlagert, und dadurch, dass das Fahrzeug (3) zum Manövrieren des vorderen Achsaggregats eine Servolenkungsvorrichtung (1) nach einem der Ansprüche 1 bis 6 umfasst, um dem Lenker ein Empfinden zu vermitteln, das nahe jenem eines Achsaggregats ist, das mit keinem Sperrmodus versehen ist.

## Claims

1. A power steering device (1) intended for maneuvering a running gear (2) of a vehicle (3) which comprises a first wheel (4) both steering and driving and a second wheel (6) both steering and driving which are coupled to each other by a limited slip differential (7) arranged to transmit a driving torque (C5) to said first wheel and second wheel in order to propel the vehicle, said limited slip differential (7) being designed to automatically activate, in case of loss of synchronism and/or adhesion of one of the first and second wheels (4, 6), an operation mode called « blocking mode » in which said limited slip differential transfers the majority of the driving torque (C5) to the slowest of the first and second wheels (4, 6), said power steering device further comprising at least one steering mechanism (10) which is arranged to maneuver the first and second wheels (4, 6) in order to modify their steering angle (θ₄, θ₆), a steering wheel (16) which allows a driver to pilot said steering mechanism (10), as well as an assist motor (17) which engages the steering mechanism and which is controlled by at least one management module (20) arranged to establish an assist setpoint (C_{MOT}) and apply said assist setpoint to said assist motor (17), said power steering device (1) being **characterized in that** the steering management module (20) contains laws of compensation (L1, L2, L3, L4, L5, L6, L7) which are involved in establishing the assist setpoint so as to integrate in said assist setpoint (C_{MOT}) corrective components (Δ1, Δ2, Δ3, Δ4, Δ5, Δ6, Δ7) allowing the assist motor (17) to compensate some force components (Fi), called « disturbing force components », which are induced in the steering mechanism by the activation of the blocking mode of the limited slip differential, so as to provide the driver with a feeling close to that of a running gear (2) devoid of blocking mode,
the device being **characterized in that**, among laws of compensation, there is:
(i) at least one attenuation law of the alternating force feedbacks (L1, L2), which generates corrective components called « anti-feedbacks » which oppose the disturbing force components (Fi) caused by alternations of majority transfers of driving torque (C5) between the first wheel (4) and the second wheel (6), and **in that** the attenuation law (L1, L2) of the alternating force feedbacks involves an anti-feedbacks corrective component called « derivative component » (Δ1, Δ2) which is established by multiplying the value of the time derivative (dCᵥₒₗₐₙₜ /dt) of the steering wheel torque (Cᵥₒₗₐₙₜ) exerted on the steering mechanism (10) at the steering wheel (16) by a gain, called « derivative gain » (Kd), and/or
(ii) at least one anti-freezing law (L3, L4, L5, L6, L7) which generates corrective components called « return corrective components » (Δ3, Δ4, Δ5, Δ6, Δ7) which, when the steering wheel (16) is rotated so as to form a non-zero steering wheel angle (θᵥₒₗₐₙₜ) relative to a central position (θ₀) corresponding to the straight-line trajectory, are capable of forcing the return of the steering wheel (16) to said central position (θ₀), against the disturbing force components (Fᵢ) which tend to reduce or even eliminate the self-aligning torque of the wheels (4, 6), and **in that** the anti-freezing law comprises:
- an open-loop return function (L3) which establishes a return setpoint (Cᵣₐₚₚₑₗ) by multiplying an angular deviation, defined as the difference between the instantaneous angular position of the steering wheel (θᵥₒₗₐₙₜ) and the central angular position (θ₀) of the steering wheel (16) by a gain, called « open-loop return gain » (GBO_{Rappel}), and/or
- a closed-loop return function (L5) which defines a return angular speed setpoint of the steering wheel (θ̇_{volant_consigne}) and which adapts in real time the assist setpoint (C_{Mot}) applied to the assist motor (17) so that the actual return angular speed of the steering wheel (θᵥₒₗₐₙₜ) follows said return angular speed setpoint of the steering wheel (θ̇_{volant_consigne}), and **in that** the steering wheel return speed setpoint (θ̇_{volant_consigne}) increases, in absolute value, with the angular deviation which is defined as the difference between the instantaneous angular position of the steering wheel (θᵥₒₗₐₙₜ) and the central angular position (θ₀) of said steering wheel.

2. The device according to claim 1 **characterized in that** the attenuation law of the alternating force feedbacks (L1, L2), comprises a first adaptation function (L1), according to which the derivative gain (Kd) increases when the steering wheel torque (Cᵥₒₗₐₙₜ) exerted on the steering wheel (16), or, in an equivalent manner, when the assist gradient (dC_{Mot}/dCᵥₒₗₐₙₜ) which represents, at the considered instant, the variation (dC_{Mot}) of the assist torque delivered by the assist motor (17) added to the corresponding variation of the steering wheel torque (Cᵥₒₗₐₙₜ), or else, if the steering device (1) comprises a steering rack (11) on which a longitudinal traction force called « rack force » is exerted, when said rack force, falls under a predetermined threshold, called « straight line threshold », which indicates that the vehicle (3) follows a trajectory close to the straight line.

3. The device according to claim 1 or 2 **characterized in that** the attenuation law of the alternating force feedbacks (L1, L2) comprises a second adaptation function (L2), according to which the derivative gain (Kd) is adapted depending on the longitudinal speed of the vehicle (V_{véhicule}), said second adaptation function (L2) having a maximum (Kd_{pic}) which is located at a speed abscissa (V_{véhicule}) comprised between 35 km/h and 90 km/h, preferably between 35 km/h and 50 km/h, and for example substantially equal to 40 km/h.

4. The device according to claim 3 **characterized in that** the second adaptation function (L2) is globally concave, and presents for this purpose at least one growing domain, between the origin value (Kd₀) which correspond to the value of the derivative gain at zero speed, and the maximum (Kd_{pic}), then a decreasing domain beyond that maximum (Kd_{pic}).

5. The device according to any of preceding claims **characterized in that** the open-loop return gain (GBO_{Rappel}) of the anti-freezing law is adjusted depending on the longitudinal speed of the vehicle (V_{véhicule}), by a generally concave amplification function (L4) whose width at half height (W_{L4}) covers a speed range which extends from a low value equal to or less than 15 km/h to a high value equal to or greater than 100 km/h.

6. The device according to any of preceding claims **characterized in that** the closed-loop return function (L5) of the anti-freezing involves a gain, called « closed-loop return gain » (GBF_{Rappel}) which is adjusted on the one hand as a function (L6) of the longitudinal speed of the vehicle (V_{véhicule}), and on the other hand as a decreasing function (L7) of the steering wheel torque (Cᵥₒₗₐₙₜ) exerted on the steering wheel (16).

7. A front-wheel drive automotive vehicle (3) comprising a front running gear (2) both driving and steering, which has a first wheel (4) both steering and driving and a second wheel (6) both steering and driving, said vehicle (3) being **characterized in that** the first wheel (4) and the second wheel (6) are coupled to each other by a limited slip differential (7) arranged to transmit a driving torque (C5) to said first wheel and second wheel in order to propel the vehicle, said limited slip differential (7) being designed to automatically activate, in case of loss of synchronism and/or adhesion of one of the first and second wheels (4, 6), an operation mode called « blocking mode » in which said limited slip differential transfers the majority of the driving torque (C5) to the slowest of the first and second wheels (4, 6), and **in that** said vehicle (3) comprises, in order to maneuver said front running gear, a power steering device (1) according to any of claims 1 to 6 so as to provide the driver with a feeling close to that of a front running gear devoid of blocking mode.
